# EUROPEAN PATENT SPECIFICATION

(11) **EP 1 465 092 B1**
(45) Date of publication and mention of the grant of the patent: **18.01.2006**
(21) Application number: 03007704.4
(22) Date of filing: 03.04.2003
(51) Int. Cl.: G06Q 20/00, H04L 9/30, H04L 29/06

(54) **System and method for secure electronic commerce**
System und Verfahren für einen sicheren E-Commerce
Système et méthode de commerce électronique sécurisé

(43) Date of publication of application: 06.10.2004
(73) Proprietor: Culture.com Technology (Macau) Ltd, Macau (CN)
(72) Inventor: Shen, Te-Chang, Avn Xian Hai S/N EDF Zhu Kuan CC,6&(I-L) (CN)
(74) Representative: Manitz, Finsterwald & Partner GbR

(56) References cited:
- DE-A- 19 924 726
- DE-A- 19 929 601
- US-A- 5 933 497
- US-A1- 2002 138 759
- B. SCHNEIER: "Applied Cryptography" 1996 , JOHN WILEY & SONS, INC , USA XP002251738 * page 28 - page 33 * * page 176 - page 177 * * page 216 - page 217 * * page 461 - page 473 * * page 518 - page 522 *

## Description

### FIELD OF THE INVENTION

The present invention relates to systems and methods for secure electronic commerce (e-commerce) trade, and more particularly, to a system and a method for secure e-commerce trade, applied to a network environment such as Internet or Intranet to verify and encrypt/decry trade data through the use of a public key and a private key to achieve secure e-commerce trade via point-to-point protocol (PPP).

### BACKGROUND OF THE INVENTION

For an online electronic commerce trade, a trade data is often transmitted through Internet. And as far as most people knows, Internet is not a secure channel to transmit data since it is possible that the trade data is intercepted, stolen, and even duplicated during the transmission process. Thus, it is necessary to encrypt the trade content and to allow only the trade parties to decrypt the encrypted trade data.

Generally, in terms of the encrypting/decrypting, there are symmetric key encryption system and asymmetric key encryption system. An encrypting step means to subject a data to a mathematical computation, which performs a mixed operation of data using a mathematical function, so that anyone other than the data receiver can hardly decrypt the data to get its meaning. And the key is a mathematical value for performing a unique and complex mixed operation of the data.

-The symmetric encryption system, also known as a single encrypting/decrypting key system, allows an encrypting party and a decrypting party to share an encrypting/decrypting key, while the decrypting process is just a reverse of encrypting process. And it is known that all the pin system available before 1976 belong to the type described above. Such type of encryption system is characterized by a very fast encrypting/decrypting speed. However, this system is often not thoroughly secured since the encrypting/decrypting key is shared (symmetric encrypting method). The encrypting method is applied in a data encryption standard (DES) system that is most widely adopted at the present, a FEAL-N system designed by NTT company in Japan, a IDEA system designed by Lai and Massey in 1990, and a Skipjack system proposed by U.S. Government in 1993.

Typically, the symmetric encrypting method is implemented in the electronic commerce encryption system and method by encrypting the trading data at the sending terminal using the encrypting key. Then the encrypted trade data is decrypted at the receiving terminal using the decrypting key. Therefore, the authority to use the decrypting key must be tightly controlled, otherwise anyone who has the decrypting key can decrypt at their own will, the data that is encrypted with the encrypting key corresponding to this decrypting key, and thus obtain the data content. Accordingly, the website server usually encrypts the communication link between the users with such encrypting/decrypting method. Once the network link is established between the website server and the users who browse websites, a special session key is used as a tool for encrypting/decrypting the data. For example, as one user needs to download files from a secure channel site, the website server would encrypt the file to be downloaded using one session key, so that the user can decrypt the encrypted file using a copy of the of the session key after encrypted file is received.

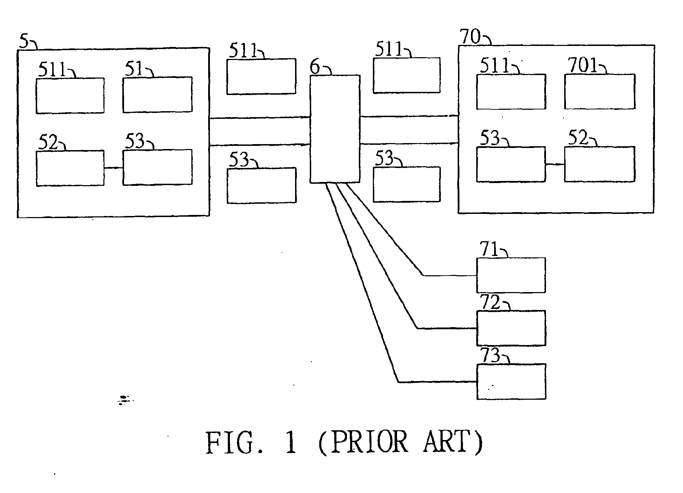

Fig. 1 illustrates a conventional symmetric encryption system according to the prior art. As the website server 5 and an user of personal computer (PC) 70 who browses a web page 701 are linked through Internet 6, a session key 51 is specifically provided by the website server 5 as a tool for encrypting/decrypting the file. For example, when the user wishes to download file from the website server 5 that serves as the secure channel site, the website server 5 encrypts the file52 to be downloaded into an encrypted file 53 using the session key 51, encrypted data is transmitted to the PC 70 through Internet 6. After the user of the PC 70 receives the encrypted file 53, the user has to decrypt the encrypted file 53 through the browsed website 701 of the PC 70 together with a copy 511 of the session key 51 to obtain the file 52, i.e. the file to be downloaded. However, for the encrypting/decrypting method described above, one copy 511 of the session key 51 needs to be transmitted to the PC 70 at the other end through Internet if a secure link is to be established, while such transmission process is vulnerable to Internet hackers who has the chance to intercept the data and obtain the trade data content.

As for an asymmetrical encrypting method, also known as double encryption key system, comprises an encryption key and a decryption key. Generally, the encryption key is one set of numbers, whereas the decryption key is another set of different numbers. A single function is used to encrypt the data, such that the data itself is transformed into a corresponding number. The number is then input to the function to get a function value, wherein the function value is another set of numbers or encryption code of the data. Since the data is encrypted using the single function, it is very difficult to get the original value of the single function and obtain the original data by merely applying an inverse function. So, it is much better in terms of its security. Accordingly, the public key encryption system developed after 1976 belongs to this type. This type of encryption system can disclose its encryption key to public, but the decryption key can never be obtained through the disclosed encryption key. Characteristically, the system has a simple and clear security analysis, but with a much more time-consuming encryption/decryption manipulaticm. The well-known asymmetrical encryption system includes a RSA system, Rabin system, McEliece system, minibag system, and probability code system.

Furthermore, a secure sockets layer (SSL) of the website server utilizes a public key encryption to prevent the session key from being intercepted during data transfer. The public key encryption executes encryption/decryption using two different keys, one being the public key, and the other being the private key. The private key is possessed by personal users themselves, whereas the public key is provided to any user who requests to use. When the private key is used to encrypt the data, the public key is used to decrypt the encrypted data. On the other hand, when the public key is used to encrypt the data, the private key is used to decrypt the encrypted data.

As for the digital signature, it is a way to confirm the user for exerting the approved authorization, rather than to encrypt the data. The users use their own private keys to produce a data string having its private key, and such data string is combined and transferred with the data to be transferred. The data receiver at the receiving end then uses the public key from the sender to verify the effectiveness of the sender's digital signature. Since the public key of the user is provided solely for verifying the digital signature, the user's authority can be verified right after the verification of the digital signature.

The transmitting mode of the digital mail is adopted for transmitting the data so as to allow only those who receive the data to decrypt the data. The data sender utilizes the public key from the receiver to encrypt the data, while the receiver at the receiving end decrypts the encrypted data using its private key. Therefore, only those who receive the encrypted data can understand the data content.

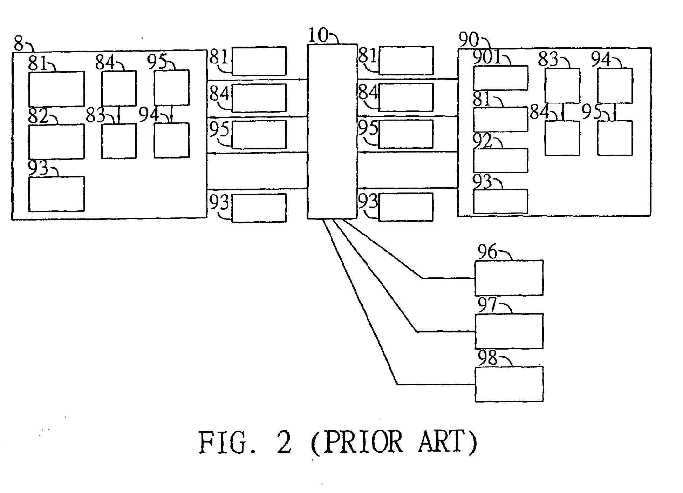

Fig. 2 illustrates a conventional asymmetric encryption system according to the prior art. As a secure e-commerce trade occurs, the system and method provide an encryption key and a decryption key, wherein the encryption key can be disclosed to public and the decryption key can never be obtained through the disclosed encryption key. At the trade data transmitting end, the trade data is encrypted using the encryption key. But at the trade data receiving end, the encrypted trade data is decrypted using the decryption key. So, as the secure e-commerce trade is taking place, the website server 8 transmits its public key 81 to the personal computer (PC) 90 through Internet 10. The user then encrypts the trade data 83 into an encrypted data 84 from the browsing web page 901 of the PC 90 using the public key 81 of the website server 8, while the encrypted data 84 is transmitted to the website server 8 through Internet 10. Once the website server 8 receives the encrypted data 84, the encrypted data is decrypted using the private key 82 of the website server 8 to obtain the original data 83 and the trade content. If the user wishes to transmit the data attached with digital signature from the browsing web page 901 of the PC 90, the user encrypts the data 94 to form an encrypted data 95 using the private key 92 of the user. After the website server 8 receives the encrypted data 95, the encrypted data 95 is decrypted using the public key 93 of the user to obtain the original data 94 and verification of the digital signature is complete.
A method using both the symmetric and asymmetric data encryption/decryption is disclosed in US 2002/0138759. This application discloses a method of encrypting the sender's/recipient's address with a symmetric key and then encrypting the key with an asymmetric key, i.e. a private key. Although two encryptions have been performed, yet once other people get hold of the asymmetric key, they can easily decrypt using the asymmetric key to obtain the symmetric key, and consequently using the obtained symmetric key to get the data (address). Further, with the conventional encryption/decryption method, the user can execute encryption/decryption easily with any hardware. As shown in Figs.1 and 2, the user can make the trade at the PCs 70, 71, 72 and 73 or any one selected from the PCs 90, 96, 97 and 98, without limiting to use of a particular PC, such as 70 or 90. In other words, the conventional encryption system and method do not have function for identifying or verifying hardware serial number of the PC. So, once the user knows about the encryption key, decryption key or encryption/decryption key, he/she may be able to obtain the trade content by decryption or make false digital signature by encryption. Therefore, to solve this problem, it is necessary to develop an encryption system and method that will bar the computer hackers from retrieving the e-commerce trade content even if they know the encryption key, decryption key or encryption/decryption key.

A primary objective of the present invention is to provide a system and a method for secure electronic commerce (e-commerce) trade, applied to a network environment such as Internet or Intranet to verify and encrypt/decry trade data through the use of a hardware serial number to achieve secure e-commerce trade via point-to-point protocol (PPP).

This object is solved by the subject matter of claims 1 and 15. Preferred embodiment are disclosed in claims 2 to 14 and 16.

In accordance with the above and other objectives, the invention provides a system and a method for secure e-commerce trade, applicable to the online shopping via Internet or Intranet. The trade data is encrypted/decrypted using particular hardware serial numbers, public keys and private keys, so that the secure e-commerce trade is achieved when the online shopping is made through the PPP.

The secure e-commerce trade system includes a trade server center, a data transmission network, and a user end device. The data transmission network may be Internet or Intranet, responsible to mediate a bi-directional transmission of data or data between the trade server center and the user end device, so that the e-commerce can be made. The trade server center is a server platform used in securing the e-commerce trade, whereas the user end device is provided for the user to execute the secure e-commerce trade. And each user end device has its unique hardware serial number for encrypting/decrypting the trade data that can never be encrypted/decrypted using different hardware serial numbers from other user end devices. And prior to the making of the e-commerce trade, the trade server center records the hardware serial number and user information of each user end device.

The trade server center includes a trade server encryption/decryption module, wherein the trade server encryption/decryption module exchanges the public keys with one or more user end devices, via a data transmission network. And when the secure e-commerce trade is taking place, the trade server encryption/decryption module encrypts the trade data via a symmetrical encrypting method using a hardware serial number of a user end device, and an asymmetrical single function encrypting method using a public key of the user end device. On the other hand, the trade server encryption/decryption module can also decrypt the encrypted data via the asymmetrical single function encrypting/decrypting method using one or more the public key of the user end device, and the symmetrical encrypting/decrypting method using the hardware serial number of the user end device.

The encryption/decryption module needs to be constructed in the user end device, so as to enable the exchange of the public keys between the encryption/decryption module and the trade server center through the data transmission network. As the e-commerce trade is taking place, the encryption/decryption module encrypts the trade data via the symmetrical encrypting/decrypting method using the hardware serial number of the user end device, and asymmetrical single function encrypting/decrypting method using the private key of the user end device. On the other hand, the encryption/decryption module decrypts the encrypted data via the asymmetrical single function encrypting/decrypting method using the private key of the user end device, and the symmetrical encrypting/decrypting method using the hardware serial number of the user end device.

The present invention provides the secure e-commerce trade method to firstly initiate the process of securing the e-commerce trade by exchanging the public keys between the trade server center and the user at the user end device. The trade server center then matches, according to the hardware serial number and the user information of the user end device, the user's public key that is saved in user end device. Next, the secure e-commerce can take place through the data transmission network between the trade server center and the user end device, via the symmetrical encrypting/decrypting method and asymmetrical single function encrypting/decrypting method using the hardware serial number, public key, and private key.

According to the system and method for secure e-commerce trade, the trade data is encrypted/decrypted via the symmetrical encrypting/decrypting method, and asymmetrical single function encrypting/decrypting method using not only the public key and private key, but also the hardware serial number of the user end device. Since each user end device has a unique hardware serial number, the trade data is still not encrypted/decrypted by other users whose user end device having different hardware serial numbers from that of the true user, even if they know the true user's public key and private key. That is, the hardware serial numbers of other user end devices are different from that of the true user end device, so other users can never encrypt/decrypt the trade data. Therefore, the secure e-commerce trade as well as the digital signature verification can be achieved.

### BRIEF DESCRIPTION OF THE DRAWINGS

The present invention can be more fully understood by reading the following detailed description of the preferred embodiments, with reference made to the accompanying drawings, wherein:
Fig. 1 (PRIOR ART) is a schematic diagram of a conventional symmetric encryption system;
Fig. 2 (PRIOR ART) is a schematic diagram of a conventional asymmetric encryption system;
Fig. 3 is a systemic block diagram illustrating a basic hardware configuration of a secure electronic commerce trade system according to the invention;
Fig. 4 is a systematic block diagram illustrating in more detail of the basic hardware configuration of the secure electronic commerce trade system shown in Fig. 3;
Fig. 5 is a schematic diagram illustrating in more detail of data flow according to Figs. 3 and 4;
Fig. 6 is a schematic diagram illustrating in more detail of data encryption/decryption according to Figs. 3 and 4;
Fig. 7 is a flow chart illustrating processes for performing a secure electronic commerce trade method in the use of the secure electronic commerce trade system according to the invention;
Fig. 8 is a flow chart illustrating procedural steps for executing the secure electronic commerce trade shown in Fig. 7;
Fig. 9 is a flow chart illustrating an embodiment of more detailed procedural steps for executing the secure electronic commerce trade shown in Fig. 7;
Fig. 10 is a flow chart illustrating another embodiment of more detailed procedural steps for executing the secure electronic commerce trade shown in Fig. 7;
Fig. 11 is a flow chart illustrating an embodiment of processes for performing a secure electronic commerce trade method in the use of the secure electronic commerce trade system shown in Fig. 4;
Fig. 12 is a flow chart illustrating another embodiment of processes for performing a secure electronic commerce trade method in the use of the secure electronic commerce trade system shown in Fig. 4;
Fig. 13 is a flow chart illustrating processes for performing a secure electronic commerce trade method in the use of the secure electronic commerce trade system according to an embodiment of the invention; and
Fig. 14 is a flow chart illustrating processes for performing a secure electronic commerce trade method in the use of the secure electronic commerce trade system according to another embodiment of the invention.

### DETAILED DESCRIPTION OF THE PREFERRED EMBODIMENTS

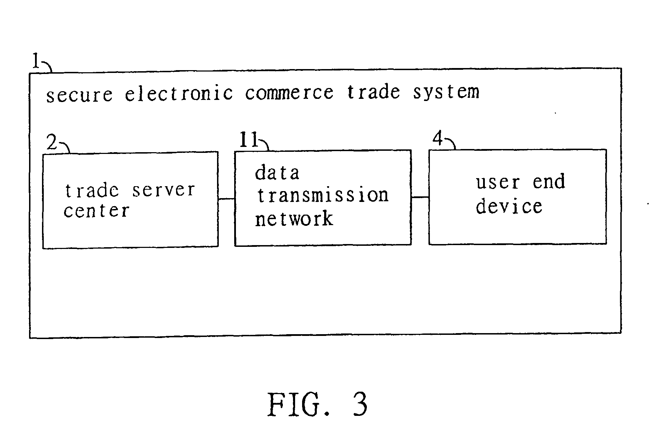

Fig. 3 is a systematic block diagram illustrating a basic hardware configuration of a secure electronic commerce trade system according to the present invention. As shown in the diagram, the secure electronic commerce trading system 1 comprises a trade server center 2, a data transmission network 11, and a user end device 4.

Preferably, the data transmission network 11 may be Internet or Intranet which mediating data, so that a trading can be completed between the trade server center 2 and the user end device 4. The trade server center 2 may be a server platform for executing the secure electronic commerce trading, wherein the trade server center 2 records a hardware serial number and personal information of each of the user end device 4, and stores its own public key and private key.

Prior to the secure electronic commerce trading, the trade server center 2 records the hardware serial number and the personal information of each of the user end device 4, while initiating steps of the secure electronic commerce trading. At the initial step, the user end device 4 provides the user with secure electronic commerce trading service, where each of the user end device 4 has its unique hardware serial number for verifying and encrypting/decrypting the trade data. Each of the user end device 4 also stores its own public key and private key. The trade server center 2 and the user end device 4 may verify and encrypt/decrypt the data via an asymmetric single function encrypting method, such as the method in a RSA encryption system or a symmetric encrypting method, such as the method in a DES encryption system. After the initial step of the secure electronic commerce trading, the trade server center 2 will store its private key and the public key of the user end device 4, as well as its private key that is selected with respect to the hardware serial number of the user end device 4. Since the user end devices 4 have different hardware serial numbers, they also have different private keys. And while the hardware serial number of the user end device 4 is used for the purpose of selecting the private key, it is also applicable to the asymmetric single function encrypting/decrypting system and the symmetric encrypting/decrypting system. Therefore, the user end device 4 can only verify and encrypt/decrypt its relevant using its hardware serial number. And as the user end device 4 verifies and encrypts/decrypts the data using its hardware serial number, the data need to be decrypted using not only its public key and private key, but also its hardware serial number. So, if the hardware serial number were not a serial number of its own hardware, the encrypted data still need to recognize the hardware serial number of the user end device 4 before the data can be decrypted, even though the public key and private key for decrypting the data are provided. In other words, even if other people know the public key and private key for decrypting the data, the trade data still can not be verified and encrypted/decrypted because their hardware serial number is not identical to the hardware serial number of the true user end device. Accordingly, the trade data will not be verified and encrypted/decrypted by an unknown user end device, since the hardware serial number of another user end device is not the same as the hardware serial number of the true user end device. As a result, the secure electronic commerce trading and digital signature verification can be achieved.

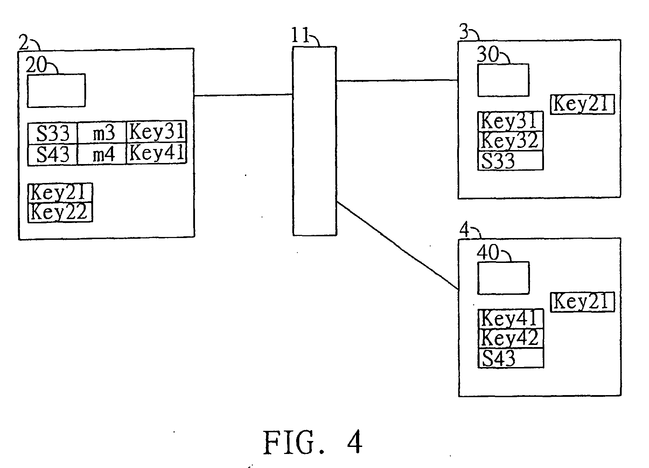

Fig. 4 is a systematic block diagram illustrating in more detail of the basic hardware configuration of the secure electronic commerce trade system shown in Fig. 3. As shown in Fig. 4, the trade server center 2 comprises a trade server encryption/decryption module 20, whereas the user end devices 3 and 4 comprises an encrypting module 30 and a decrypting module 40, respectively.

The trade server encryption/decryption module 20 stores unique hardware serial numbers S33, S43 and user information m3, m4, which those corresponding to the user end devices 3, 4. The trade server encryption/decryption module 20 also stores the public key Key21 and private key Key22 of the trade server center 2, and the public keys Key31, Key41 of the user end devices 3. 4. wherein the public keys Key31, Key41 are not identical. And by initiating the steps or the secure electronic commerce trading, the trade server center can acquire the public keys Key31, Key41 of the user end devices 3, 4.

Then, the trade server encryption/decryption module 20 and the user end devices 3, 4 exchange their public keys with each other through a data transmission network 11, whereby the trade server encryption/decryption module 20 and the user end device 3 exchange their public keys Key21, Key31 with each other, and the trade server encryption/decryption module 20 and the user end device 4 exchange their public keys Key21 and Key41 with each other. When the secure electronic commerce trading is taking place, the trade server encryption/decryption module 20 encrypts the trade data via the symmetric encrypting/decrypting methods Es, Ds using the hardware serial numbers S33, S34 of the user end devices 3, 4, and via the asymmetric single function encrypting/decrypting methods Ea, Da using the public keys Key31, Key41 of the user end devices 3, 4. Conversely, the trade server encryption/decryption module 20 decrypts the encrypted trade data via the asymmetric single function encrypting/decrypting methods Ea, Da using the public keys Key31, Key41 of the user end devices 3, 4, and via the symmetric encrypting/decrypting methods Es, Ds using the hardware serial numbers S33, S34 of the user end devices 3, 4.

The encrypting module 30 and the decrypting module 40 store the public keys Key21 of the trade server center 2, the public keys Key31, Key41, private keys Key32, Key42, hardware serial numbers S33, S43, and user information m3, m4 of the user end devices 3, 4, respectively. The public keys Key31, Key41, private keys Key32, Key42, and hardware serial numbers S33, S43 stored and utilized respectively by the encryption/decryption modules 30, 40 are not identical, and the encryption/decryption modules 30, 40 can acquire the public key Key21 through the data transmission network 11.

The encryption/decryption modules 30, 40 exchange the public keys with the trade server center 2 through the data transmission network 11. That is, the encrypting module 30 and the trade server center 2 exchange their public keys Key21, Key31 with each other, whereas the decrypting module 40 and the trade server center 2 exchange their public keys Key21, Key41 with each other. When the secure electronic commerce trade is taking place, the encryption/decryption modules 30, 40 encrypt the data via the symmetrical encrypting/decrypting method Es, Ds using the hardware serial numbers S33, S43 of the user end devices 3, 4, and via the asymmetrical single function encrypting/decrypting methods Ea, Da using the private keys Key32, Key42 of the user end devices 3, 4. Correspondingly, the encrypted trade data is decrypted by the encryption/decryption modules 30, 40 via the asymmetrical single function encrypting/decrypting methods Ea, Da using the private keys Key32, Key42 of the user end devices 3, 4, and via the symmetrical encrypting/decrypting method Es, Ds using the hardware serial numbers S33, S43 of the user end devices 3, 4.

Prior to the secure electronic commerce trade, a trade server encryption/decryption module 20 of the trade server center 2 records the hardware serial numbers S33, S43, and the user information m3, m4 of the user end devices 3, 4, respectively, while the procedure of secure electronic commerce trade is initiated. When the procedure of electronic commerce trade is initiated, the encryption/decryption modules encrypt the public keys Key31, Key41, the hardware serial numbers S33, S43, and the user information m3, m4 of the user end devices 3, 4 into files 34, 44 via the asymmetrical single function encrypting method Ea using the public key Key21 of the trade server center 2. The public key Key21 of the trade server center 2, in this case, encrypts the file 34=Ea-3(Key31+S33+m3) via the asymmetrical single function encrypting method, whereas the public key Key21 of the trade server center 2 encrypts the file 44=Ea-4(Key41+S43+m4) via the asymmetrical single function encrypting method. And through the data transmission network 11, the encrypted files 34, 44 are transmitted to the trade server center 2. After the trade server encryption/decryption module 20 of the trade server center 2 receives the encrypted files 34, 44, the encrypted files 34, 44 are decrypted by the trade server encryption/decryption module 20 via the asymmetrical single function decrypting method Da using its private key Key21. For example, Key31, S33, and m3 are obtained from Da - 3(Ea - 3(Key31+S33=m3)), and Key41, S43, and m4 are obtained from Da - 4(Ea - 4(Key41+S43=m4)). That is, the public keys Key31, Key41, the hardware serial numbers S33, S43, and the user information m3, m4 of the user end devices 3, 4 are obtained. Before the secure electronic commerce trade is taking place, the trade server encryption/decryption module 20 records the hardware serial numbers S33, S43, and the user information m3, m4 of the user end devices 3, 4 and correspondingly saves the public keys Key33, Key43 of the user end devices 3, 4.

Take an example, where the secure electronic commerce trade takes place with the user end device 4 is involved. If the trade data m is transmitted from the trade server center 2 through the data transmission network 11 to the user end device 4, the trade server encryption/decryption module 20 encrypts the trade data m into a encrypted data Es(m) via the symmetrical encrypting method Es using the hardware serial number S43 of the user end device 4. Next, the encrypted data Es(m) is further encrypted into a twice-encrypted data Ea(Es(m)) via the asymmetrical single function encrypting method Ea using the public key Key41 of the user end device 4. The trade server center 2 then transmits the twice-encrypted data Ea(Es(m)) through the data transmission network 11 to the user end device 4. After the user end device 4 receives the twice-encrypted data Ea(Es(m)), the encryption/decryption module 40 of the user end device 4 performs a first decrypting step Da(Ea(Es(m))) to the twice-encrypted data Ea(Es(m)) to obtain the encrypted data Es(m) via the asymmetrical single function decrypting method Da using the private key Key42 of the user end device 4. After the first decrypting step Da(Ea(Es(m))) is performed, the encryption/decryption module 40 performs a second decrypting step Ds(Es(m)) to the encrypted data Es(m) to obtain the trade data and understand the trade content via the symmetrical decrypting method Ds using the hardware serial number S43 of the user end device 4.

Take another example with the user end device 4 involving in the secure electronic commerce trade. If the trade data n is transmitted from the user end device 4 through the data transmission network 11 to the trade server center 2, the encryption/decryption module 40 encrypts the trade data n into an encrypted data Es(n) via the symmetrical encrypting method Es using the hardware serial number S43 of the user end device 4. Next, the encrypted data Es(n) is further encrypted into a twice-encrypted data Ea(Es(n)) via the asymmetrical single function encrypting method Ea using the public key Key42 of the user end device 4. The user end device 4then transmits the twice-encrypted data Ea(Es(n)) through the data transmission network 11 to the trade server center 2. After the trade server center 2 receives the twice-encrypted data Ea(Es(n)), the trade server encryption/decryption module 20 performs a first decrypting step Da(Ea(Es(n))) to the twice-encrypted data Ea(Es(n)) to obtain the encrypted data Es(n) via the asymmetrical single function decrypting method Da using the public key Key41 of the user end device 4. After the first decrypting step Da(Ea(Es(n))) is performed, the trade server encryption/decryption module 20 performs a second decrypting step Ds(Es(n)) to the encrypted data Es(n) to obtain the trade data n and understand the trade content via the symmetrical decrypting method Ds using the hardware serial number S43 of the user end device 4.

Take a further example, where the secure electronic commerce trade takes place with the user end device 3 is involved. If the trade data p is transmitted from the trade server center 2 through the data transmission network 11 to the user end device 3, the trade server encryption/decryption module 20 encrypts the trade data p into a encrypted data Es(p) via the asymmetrical single function encrypting method Ea using the public key Key31 of the user end device 3. Next, the encrypted data Ea(p) is further encrypted into a twice-encrypted data Es(Ea(p)) via the symmetrical encrypting method Es using the hardware serial number S33 of the user end device 3. The trade server center 2 then transmits the twice-encrypted data Es(Ea(p)) through the data transmission network 11 to the user end device 3. After the user end device 3 receives the twice-encrypted data Es(Ea(p)), the encryption/decryption module 30 of the user end device 3 performs a first decrypting step Ds(Es(Ea(p))) to the twice-encrypted data Es(Ea(p)) to obtain the encrypted data Ea(p) via the symmetrical decrypting method Ds using the hardware serial number S33 of the user end device 3. After the first decrypting step Ds(Es(Ea(p))) is performed, the encryption/decryption module 30 perfonns a second decrypting step Da(Ea(p)) to the encrypted data Ea(p) to obtain the trade data and understand the trade content via the asymmetrical single function decrypting method Da using the private key Key32 of the user end device 3.

Take another example that involves the user end device 3 in making the secure electronic commerce trade. If the trade data q is transmitted from the user end device 3 through the data transmission network 11 to the trade server center 2, the encryption/decryption module 30 encrypts the trade data q into a encrypted data Ea(q) via the asymmetrical encrypting method Ea using the private key Key32 of the user end device 3. Next, the encrypted data Ea(q) is further encrypted into a twice-encrypted data Es(Ea(q)) via the symmetrical encrypting method Es using the hardware serial number S33 of the user end device 3. The user end device 3 then transmits the twice-encrypted data Es(Ea(q)) through the data transmission network 11 to the trade server center 2. After the trade server center 2 receives the twice-encrypted data Es(Ea(q)), the trade server encryption/decryption module 20 performs a first decrypting step Ds(Es(Ea(q))) to the twice-encrypted data Es(Ea(q)) to obtain the encrypted data Ea(q) via the symmetrical decrypting method Ds using the hardware serial number S33 of the user end device 3. After the first decrypting step Ds(Es(Ea(q))) is performed, the trade server encryption/decryption module 20 performs a second decrypting step Da(Ea(q)) to the encrypted data Ea(q) to obtain the trade data q and understand the trade content via the asymmetrical single function decrypting method Da using the public key Key31 of the user end device 3.

Accordingly, with the public key Key21 and private key Key22 of the trade server center 2, as well as the hardware serial numbers S33, S34, the public keys Key31, Key41 of the user end devices 3, 4, the trade server encryption/decryption module 20 encrypts the trade data via the asymmetrical single function encrypting method Ea and the symmetrical encrypting method Es, and decrypts the encrypted trade data via the asymmetrical single function decrypting method Da and the symmetrical decrypting method Ds.

And with the public keys Key31, Key41, the private keys Key32, Key42, and the hardware serial numbers S33, S34 of the user end devices 3, 4, as well as of the public key Key21 of the trade server center 2, the encryption/decryption modules 30, 40 respectively encrypt the trade data via the asymmetrical single function encrypting method Ea and the symmetrical encrypting method Es, and decrypt the encrypted trade data via the asymmetrical single function decrypting method Da and the symmetrical decrypting method Ds.

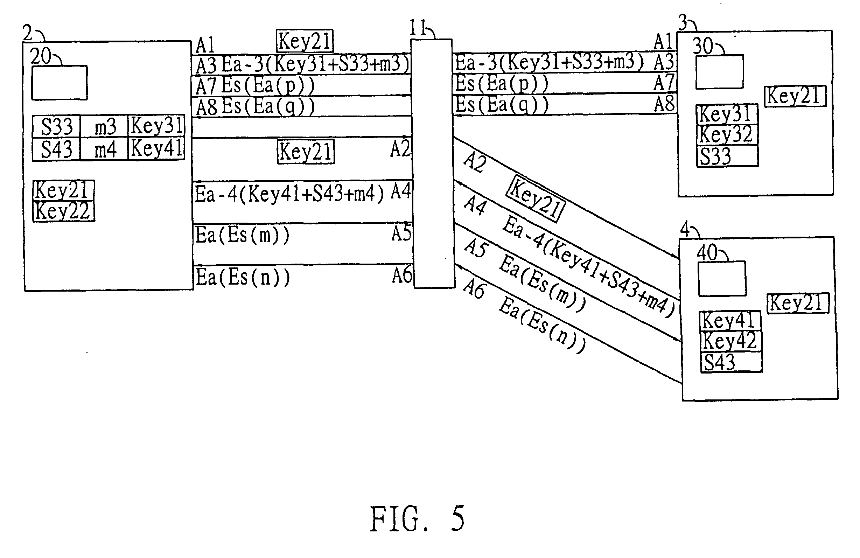

Fig. 5 is a schematic diagram illustrating in more detail of a direction in which the data is transmitted according to Figs. 3 and 4. As shown in the diagram, after the trade server center 2 is linked through the data transmission network 11 to the user end devices 3, 4, the pubic key 21 of the trade server center 2 is passed to the user end device 3 through the data transmission network 11. with its direction represented by A1. The public key 21 is also passed to the user end device 4, with its direction represented by A2.

After the public key 21 is received, the user end devices 3,4 respectively encrypt the data (Key31 +S33+m3), (Key41+S43+m4) via the asymmetrical single function encrypting methods Ea-3, Ea-4, and transmit the encrypted data to the trade server center 2. A direction A3 represents a direction in which the encrypted data Ea-3 (Key31 +S33+m3) is passed from the user end device 3 to the trade server center 2, where as a direction A4 represents a direction in which the encrypted data Ea-4 (Key41+S43+m4) is passed from the user end device 4 to the trade server center 2.

When the secure electronic commerce trade is taking place, the trade server eneryption/decryption module 20 of the trade server center 2 encrypts the data m into the encrypted data Es(m) via the symmetrical encrypting method Es using the hardware serial number S43 of the user end device 4. Next, the encrypted data Es(m) is further encrypted into the encrypted data Ea(Es(m)) via the asymmetrical single function encrypting method Ea using he public key 41 of the user end device 4. A direction A5 represents a direction in which the encrypted data Ea(Es(m)) is transmitted from the trade server center 2 to the user end device 4 through the data transmission network 11.

The encryption/decryption module 40 of the user end device 4 encrypts the data n into an encrypted data Es(n) via the symmetrical encrypting method Es using the hardware serial number S43 of the user end device 4. Next, the encrypted data Es(n) is further encrypted into a twice-encrypted data Ea(Es(n)) via the asymmetrical single function encrypting method Ea using the private key 42 of the user end device 4. A direction A6 represents a direction in which the twice-encrypted data Ea(Es(m)) is transmitted from the user end device 4 to the trade server center 2 through the data transmission network 11.

The trade server encryption/decryption module 20 of the trade server center 2 encrypts the data p to be an encrypted data Ea(p) via the asymmetrical single function encrypting method Ea using the public key 31 of the user end device 3. Next, the encrypted data Ea(p) is further encrypted as a twice-encrypted data Es(Ea(p)) via the symmetrical encrypting method Es using the hardware serial number S33 of the user end device 3. A direction A7 represents a direction in which the twice-encrypted data Es(Ea(p)) is transmitted from the trade server center 2 to the user end device 4 through the data transmission network 11.

The encryption/decryption module 30 of the user end device 3 encrypts the data q into an encrypted data Ea(q) via the asymmetrical single function encrypting method Ea using the private key 32 of the user end device 3. Next, the encrypted data Ea(q) is further encrypted into a twice-encrypted data Es(Ea(q)) via the symmetrical encrypting method Es using the hardware serial number S33 of the user end device 3. A direction A8 represents a direction in which the twice-encrypted data Es(Ea(q)) is transmitted from the user end device 3 to the trade server center 2 through the data transmission network 11.

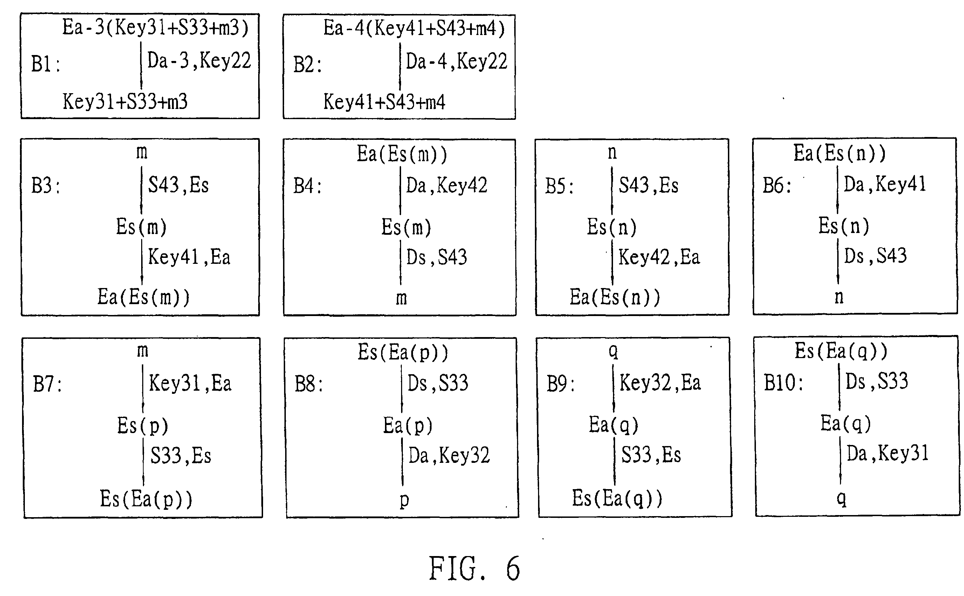

Fig. 6 is a schematic diagram illustrating in more detail of encrypting/decrypting the data according to Figs. 3 and 4. As shown in the diagram, after the trade server center 2 is linked through the data transmission network 11 to the user end devices 3, 4, the pubic key 21 of the trade server center 2 is passed to the user end devices 3, 4 through the data transmission network 11.

After the public key 21 is received, the user end devices 3,4 respectively encrypt the data (Key31+S33+m3), (Key41+S43+m4) via the asymmetrical single function encrypting methods Ea-3, Ea-4, and transmit the encrypted data to the trade server center 2. The encrypted data Ea-3 (Key31+S33+m3) is transmitted from the user end device 3 to the trade server center 2, whereas the encrypted data Ea-4 (Key41+S43+m4) is transmitted from the user end device 4 to the trade server center 2.

After the trade server encryption/decryption module 20 of the trade server center 2 receives the encrypted data Ea-3 (Key31+S33+m3), Ea-4 (Key41+S43+m4), the trade server encryption/decryption module 20 performs action B1, whereby the encrypted data Ea-3 (Key31+S33+m3) is decrypted to obtain Key31, S33, and m3 via the asymmetrical single function decrypting method Da-3 using the private key 22 of the trade server center 2. And at action B2, the encrypted data Ea-4 (Key41+S43+m4) is decrypted to obtain Key41, S43, and m4 via the asymmetrical single function decrypting method Da-4 using the private key 22 of the trade server center 2.

When the secure electronic commerce trade is taking place at action B3, the trade server encryption/decryption module 20 encrypts the data m into the encrypted data Es(m) via the symmetrical encrypting method Es using the hardware serial number S43 of the user end device 4. Next, the encrypting data Es(m) is further encrypted to obtain the twice-encrypted data Ea(Es(m)) via the asymmetrical single function encrypting method Ea using the public key 41 of the user end device 4. The twice-encrypted data Ea(Es(m)) is then transmitted to the user end device 4.

At action B4, after the twice-encrypted data Ea(Es(m)) is received by the encryption/decryption module 40 of the user end device 4, the encrypting/decrypting module 40 executes Da(Ea(Es(m))) to decrypt the Ea(Es(m)) into Es(m) via the asymmetrical single function decrypting method Da using the private key 42 of the user end device 4. Next, Ds(Es(m)) is executed to decrypt Es(m) to obtain trade data m and understand the content of the trade data m via the symmetrical decrypting method Ds using the hardware serial number S43 of the user end device 4.

At action B5, the encryption/decryption module 40 of the user end device 4 encrypts the data n into the encrypted data Es(n) via the symmetrical encrypting method Es using the hardware serial number S43 of the user end device 4. Next, the encrypted data Es(n) is further encrypted to obtain the twice-encrypted data Ea(Es(n)) via the asymmetrical single function encrypting method Ea using the private key 42 of the user end device 4. The twice-encrypted data Ea(Es(m)) is then transmitted from the user end device 4 to the trade server center 2 through the data transmission network 11.

At action B6, after the twice-encrypted data Ea(Es(n)) is received by the trade server encryption/decryption module 20 of the trade server center 2, the e the trade server encryption/decryption module 20 executes Da(Ea(Es(n))) to decrypt the Ea(Es(n)) into Es(n) via the asymmetrical single function decrypting method Da using the public key 41 of the user end device 4. Next, Ds(Es(n)) is executed to decrypt Es(n) to obtain trade data n and understand the content of the trade data n via the symmetrical decrypting method Ds using the hardware serial number S43 of the user end device 4.

At action B7, the trade server encryption/decryption module 20 encrypts the data p into the encrypted data Ea(p) via the asymmetrical single function encrypting method Ea using the public key 31 of the user end device 3. Next, the encrypted data Ea(p) is further encrypted to obtain the twice-encrypted data Es(Ea(p)) via the symmetrical encrypting method Es using the hardware serial number S33 of the user end device 3. The twice-encrypted data Es(Ea(p)) is then transmitted to the user end device 3.

At action B8, after the twice-encrypted data Ea(Es(m)) is received by the encryption/decryption module 30 of the user end device 3, the encrypting/decrypting module 30 executes Ds(Es(Ea(p))) to decrypt the Es(Ea(p)) into Ea(p) via the symmetrical decrypting method Ds using the hardware serial number S33 of the user end device 3. Next, Da(Ea(p)) is executed to decrypt Ea(p) to obtain trade data p and understand the content of the trade data p via the asymmetrical single function decrypting method Da using the private key 32 of the user end device 3.

At action B9, the encryption/decryption module 30 of the user end device 3 encrypts the data q into the encrypted data Ea(q) via the asymmetrical single function encrypting method Ea using the private key 32 of the user end device 3. Next, the encrypted data Ea(q) is further encrypted to obtain the twice-encrypted data Es(Ea(q)) via the symmetrical encrypting method Es using the hardware serial number S33 of the user end device 3. The twice-encrypted data Es(Ea(q)) is then transmitted to the trade server center 2.

At action B10, after the twice-encrypted data Es(Ea(q)) is received by the trade server encryption/decryption module 20 of the trade server center 2, the trade server encryption/decryption module 20 executes Ds(Es(Ea(q))) to decrypt the Es(Ea(q)) into Ea(q) via the symmetrical decrypting method Ds using the hardware serial number S33 of the user end device 3. Next, Da(Ea(q)) is executed to decrypt Ea(q) to obtain trade data q and understand the content of the trade data q via the asymmetrical single function decrypting method Da using the public key 31 of the user end device 3.

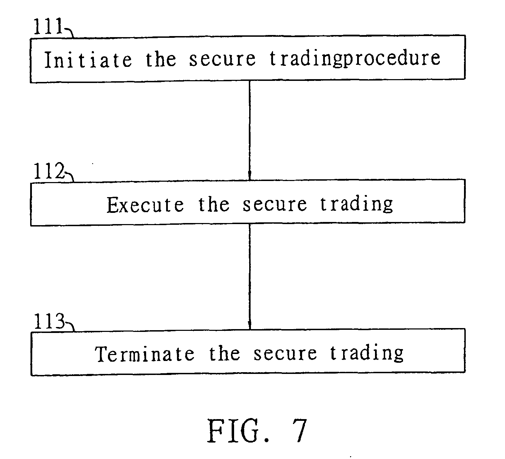

Fig. 7 is a flow chart illustrating the secure electronic commerce trade process which implements the secure electronic commerce trade system according to the present invention. Prior to the secure electronic commerce trade, the trade server center 2 records the hardware serial numbers S33, S43, and the user information m3, m4 of the user end devices 3, 4, respectively. When the secure electronic commerce trade is initially taking place at step 111, the trade server center 2 exchanges the public key with the user end devices 3, 4, respectively through the data transmission network 11. Preferably, the user end device 3 and the trade center 2 exchange their public keys Key31, Key21 with each other. That is, the user end device 3 saves the public key Key21 of the trade server center 2, while the trade server center 2 saves the public key Key31 of the user end device 3. Also, the user end device 4 and the trade center 2 exchange their public keys Key41, Key21 with each other. That is, the user end device 4 saves the public key Key21 of the trade server center 2, while the trade server center 2 saves the public key Key41 of the user end device 4 before proceeding to step 112.

At step 112 when the secure electronic commerce trade is taking place, with the hardware serial numbers S33, S43, the public keys Key31, Key41, and the private keys Key32, Key42 of the user end devices 3, 4, the trade data is encrypted via the asymmetrical single function encrypting method Ea and symmetrical encrypting method Es, while the trade data is decrypted via the asymmetrical single function decrypting method Da and the symmetrical decrypting method Ds before proceeding to step 113.

At step 113, the secure electronic commerce trade is terminated.

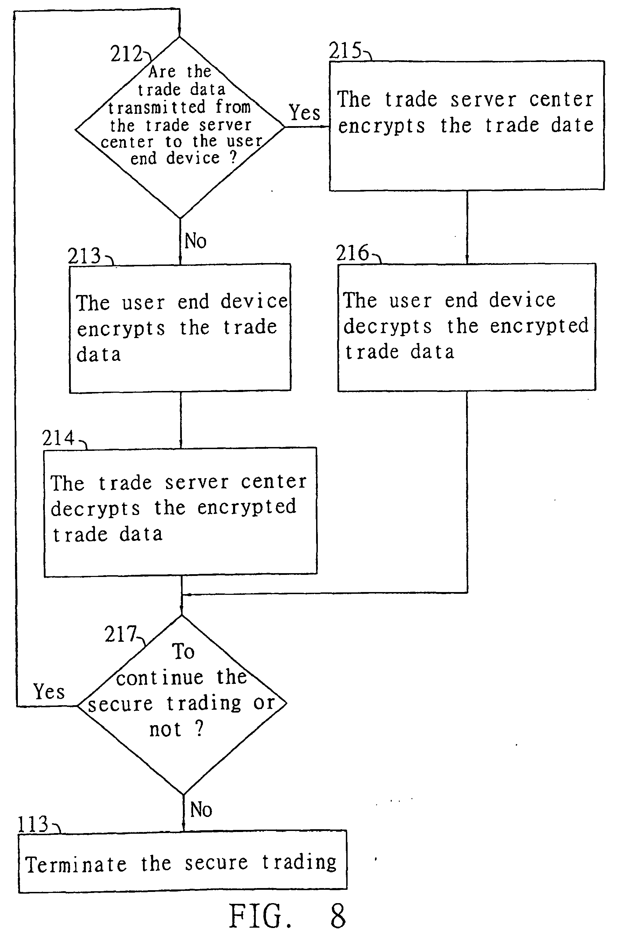

Fig. 8 is a flow chart illustrating steps for executing the secure electronic commerce trade shown in Fig. 7. In this case, the secure electronic commerce trade is demonstrated with the user end device 4 as an example and since the user end device 3 works by the same principle, it will not be further described in detail herein. As shown in the diagram, a direction in which the trade data R is transmitted is determined initially at step 212. If the trade data R is transmitted from the user end device 4 to the trade server center 2 through the data transmission network 11, then process proceeds to the step 213. But, if the trade data R is transmitted from the trade server center 2 to the user end device 4 through the data transmission network, the process proceeds to step 215.

The trade data R is transmitted from the user end device 4 to the trade server center 2 through the network transmission network 11 at step 213. The encryption/decryption module 40 of the user end device 4 encrypts the trade data R into an encrypted trade data Q via the symmetrical encrypting method Es and the asymmetrical single function encrypting method Ea using the hardware serial number S43 and the private key Key42 of the user end device 4. Then, the encrypted trade data Q is then transmitted to the trade server center 2 through the data transmission network 11 before proceeding to step 214.

At step 214, the trade server center 2 decrypts the encrypted trade data Q to obtain content of the trade data R via the asymmetrical single function decrypting method Da and the symmetrical decrypting method Ds using the previously saved public key Key41 of the user end device and the hardware serial number S43 of the user end device 4. Then, the process proceeds to step 217.

The trade data R is transmitted from the trade server center 2 to the user end device 4 through the network transmission network 11 at step 215. The trade server center 2 encrypts the trade data R into an encrypted trade data O via the symmetrical encrypting method Es and the asymmetrical single function encrypting method Ea using the hardware serial number S43 and the public key Key41 of the user end device 4. Then, the encrypted trade data O is then transmitted to the user end device 4 through the data transmission network 11 before proceeding to step 216.

At step 216, the encryption/decryption module 40 of the user end device 4 decrypts the encrypted trade data O to obtain content of the trade data R via the asymmetrical single function decrypting method Da and the symmetrical decrypting method Ds using its private key Key41 and hardware serial number S43. Then, the process proceeds to step 217.

At step 217, if the secure electronic commerce trade is to be continued, then process returns to the step 212. Otherwise, the process proceeds to step 113 to terminate the secure electronic commerce trade.

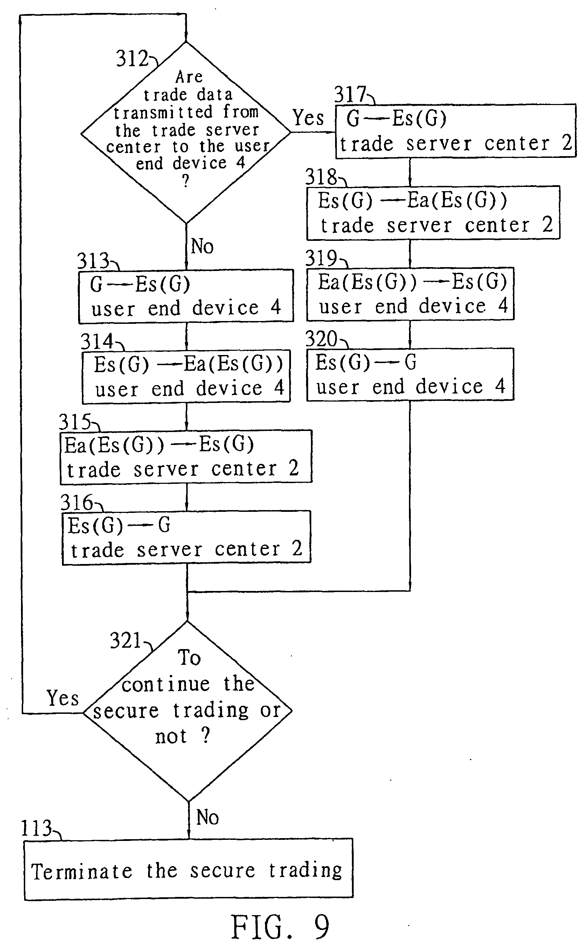

Fig. 9 is a flow chart illustrating a set of more detailed steps for executing the secure electronic commerce trade shown in Fig. 7. Here, the description is made with the user end device 4 as an example. As shown in the diagram, a direction in which a trade data G is transmitted is determined initially at step 312 to see whether the trade data G is transmitted from the user end device 4 to the trade server center 2 through the data transmission network, or the trade data G is transmitted from the trade server center 2 to the user end device 4 through the data transmission network. If the trade data G is transmitted from the user end device 4 to the trade server center 2 through the data transmission network 11, then process proceeds to the step 313. But, if the trade data G is transmitted from the trade server center 2 to the user end device 4 through the data transmission network, the process proceeds to step 317.

The trade data G is transmitted from the user end device 4 to the trade server center 2 through the network transmission network 11 at step 213. The encryption/decryption module 40 of the user end device 4 encrypts the trade data G into an encrypted trade data Es(G) via the symmetrical encrypting method Es using the hardware serial number S43 of the user end device 4. Then, the process proceeds to step 314.

At step 314, the encryption/decryption module 40 of the user end device 4 further encrypts the encrypted trade data Es(G) into a twice-encrypted trade data Ea(Es(G)) via the asymmetrical single function encrypting method Ea using the private key Key42 of the user end device 4. The twice-encrypted trade data Ea(Es(G)) is transmitted to the trade server center 2 through the data transmission network before proceeding to step 315.

At step 315, after the trade server center 2 receives the twice-encrypted trade data Ea(Es(G)), the trade server center 2 performs a first decryption Da(Ea(Es(G))) to the twice-encrypted trade data Ea(Es(G)) to obtain the encrypted trade data Es(G) via the asymmetrical single function decrypting method Da using the previously saved public key Key41 of the user end device 4. Then, the process proceeds to step 316.

At step 316, after the first decryption, the trade server encryption/decryption module 20 performs a second decryption Ds(Es(G)) to the encrypted trade data Es(G) to obtain the trade data G and know trade content via the symmetrical decrypting method Ds using the hardware serial number S43 of the user end device 4. Then, the process proceeds to step 321.

The trade data G is transmitted from the trade server center 2 to the user end device 4 through the network transmission network 11 at step 317. The trade server encryption/decryption module 20 of the trade server center 2 encrypts the trade data G into an encrypted trade data Es(G) via the symmetrical encrypting method Es using the hardware serial number S43 of the user end device 4. Then, the process proceeds to step 318.

At step 318, the trade server encryption/decryption module 20 of the trade server center 2 further encrypts the encrypted trade data Es(G) into a twice-encrypted trade data Ea(Es(G)) via the asymmetrical single function encrypting method Ea using the public key Key41 of the user end device 4. The twice-encrypted trade data Ea(Es(G)) is then transmitted from the trade server center 2 to the user end device 4 through the data transmission network before proceeding to step 319.

At step 319, after user end device 4 receives the twice-encrypted trade data Ea(Es(G)), the encryption/decryption module 40 of the user end device 4 performs a first decryption Da(Ea(Es(G))) to the twice-encrypted trade data Ea(Es(G)) to obtain the encrypted trade data Es(G) via the asymmetrical single function decrypting method Da using the private key Key42 of the user end device 4. Then, the process proceeds to step 320.

At step 320, after the first decryption, the encryption/decryption module 40 performs a second decryption Ds(Es(G)) to the encrypted trade data Es(G) to obtain the trade data G and trade content via the symmetrical decrypting method Ds using the hardware serial number S43 of the user end device 4. Then, the process proceeds to step 321.

At step 321, if the secure electronic commerce trade is to be continued, then process returns to the step 312. Otherwise, the process proceeds to step 113 to terminate the secure electronic commerce trade.

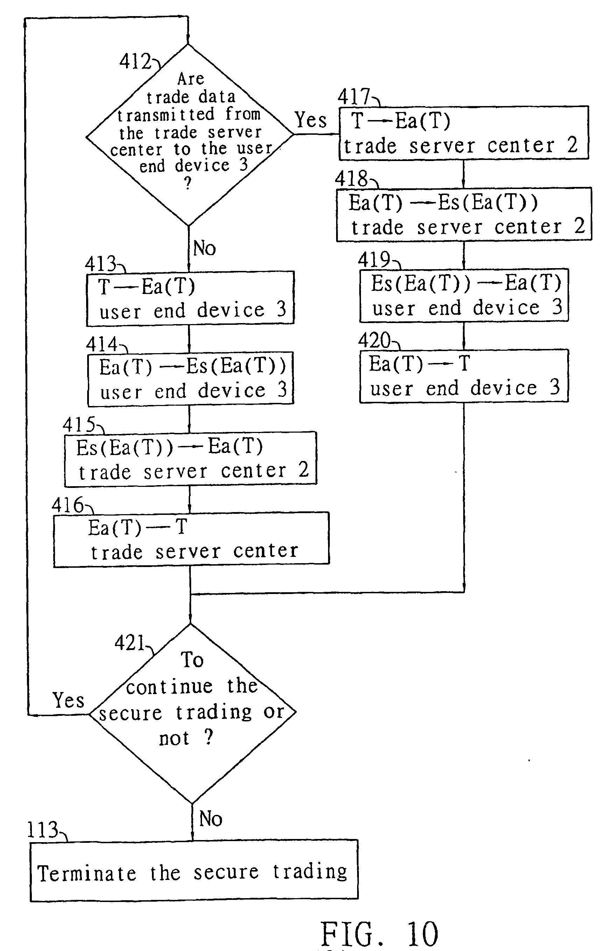

Fig. 10 is a flow chart illustrating another set of more detailed steps for executing the secure electronic commerce trade shown in Fig. 7. Here, the description is made with the user end device 3 as an example. As shown in the diagram, a direction in which a trade data T is transmitted is determined initially at step 412 to see whether the trade data T is transmitted from the user end device 3 to the trade server center 2 through the data transmission network, or the trade data T is transmitted from the trade server center 2 to the user end device 3 through the data transmission network. If the trade data T is transmitted from the user end device 3 to the trade server center 2 through the data transmission network 11, then process proceeds to the step 413. But, if the trade data T is transmitted from the trade server center 2 to the user end device 3 through the data transmission network, the process proceeds to step 417.

The trade data T is transmitted from the user end device 3 to the trade server center 2 through the network transmission network 11 at step 213. The encryption/decryption module 30 of the user end device 3 encrypts the trade data T into an encrypted trade data Es(T) via the asymmetrical single function encrypting method Ea using the private key Key32 of the user end device 3. Then, the process proceeds to step 414.

At step 414, the encryption/decryption module 30 of the user end device 3 further encrypts the encrypted trade data Ea(T) into a twice-encrypted trade data Es(Ea(T)) via the symmetrical encrypting method Es using the hardware serial number S33 of the user end device 3. The twice-encrypted trade data Es(Ea(T)) is transmitted to the trade server center 2 through the data transmission network before proceeding to step 415.

At step 415, after the trade server center 2 receives the twice-encrypted trade data Es(Ea(T)), the trade server center 2 performs a first decryption Ds(Es(Ea(T))) to the twice-encrypted trade data Es(Ea(T)) to obtain the encrypted trade data Ea(T) via the symmetrical decrypting method Ds using the hardware serial number S33 of the user end device 3. Then, the process proceeds to step 416.

At step 416, after the first decryption, the trade server encryption/decryption module 20 performs a second decryption Da(Ea(T)) to the encrypted trade data Ea(T) to obtain the trade data T and trade content via the asymmetrical single function decrypting method Da using the public key Key31 of the user end device 3. Then, the process proceeds to step 421.

The trade data T is transmitted from the trade server center 2 to the user end device 3 through the network transmission network 11 at step 417. The trade server encryption/decryption module 20 of the trade server center 2 encrypts the trade data T into an encrypted trade data Ea(T) via the asymmetrical single function encrypting method Ea using the public key Key31 of the user end device 3. Then, the process proceeds to step 418.

At step 418, the trade server encryption/decryption module 20 of the trade server center 2 further encrypts the encrypted trade data Ea(T) into a twice-encrypted trade data Es(Ea(T)) via the symmetrical encrypting method Es using the hardware serial number S33 of the user end device 3. The twice-encrypted trade data Es(Ea(T)) is then transmitted from the trade server center 2 to the user end device 3 through the data transmission network before proceeding to step 419.

At step 419, after user end device 3 receives the twice-encrypted trade data Es(Ea(T)), the encryption/decryption module 30 of the user end device 3 performs a first decryption Ds(Es(Ea(T))) to the twice-encrypted trade data Es(Ea(T)) to obtain the encrypted trade data Ea(T) via the symmetrical decrypting method Ds using the hardware serial number S33 of the user end device 3. Then, the process proceeds to step 420.

At step 420. after the first decryption, the encryption/decryption module 30 performs a second decryption Da(Ea(T)) to the encrypted trade data Ea(T) to obtain the trade data T and trade content via the asymmetrical single function decrypting method Da using the private key Key32 of the user end device 3. Then, the process proceeds to step 421.

At step 421, if the secure electronic commerce trade is to be continued, then process returns to the step 412. Otherwise, the process proceeds to step 113 to terminate the secure electronic commerce trade.

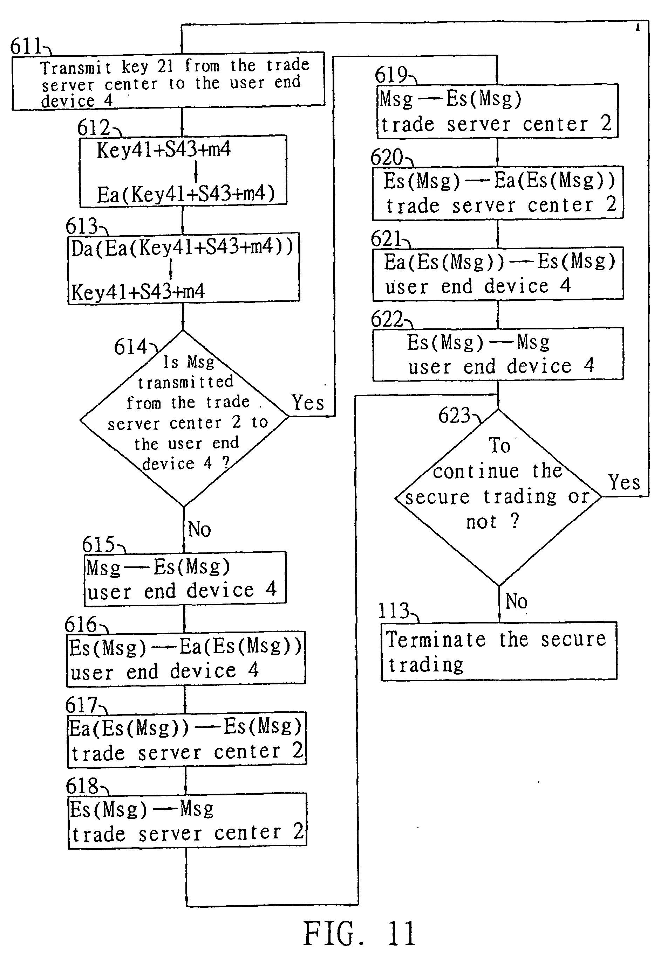

Fig. 11 is a flow chart illustrating implementation of the secure electronic commerce trade system the shown in Fig. 4 to execute the secure electronic commerce trade process. The user end device 4 in this case is a personal computer (PC) having a hardware serial number (such as a hardware serial number of motherboard). And the data transmission network 11 may preferably be Internet or Intranet. Prior to the making of the secure electronic commerce trade, the trade server encryption/decryption module 20 of the trade server center 2 records the hardware serial number S43 and user information m4 of the user end device 4.

When the secure electronic commerce trade is taking place initially at step 611, the trade server center 2 is linked through the data transmission network 11 to the user end device 4. Then, the trade server encryption/decryption module 20 of the trade server center 2 transmits the public key Key21 of the trade server center 2 to the encryption/decryption module 40 of the user end device 4 through the data transmission network 11 before proceeding to step 612.

At step 612, the encryption/decryption module 40 encrypts the public key Key41, hardware serial number S43, and user information m4 of the user end device 4 via the asymmetrical single function encrypting method Ea using the public key Key21 of the trade server center 2, with the encrypted data being Ea(Key41+S43+m4). The encrypted data Ea(Key41+S43+m4) is then transmitted to the trade server center 2 through the data transmission network 11 before proceeding to step 613.

At step 613, after the encrypted data Ea(Key41+S43+m4) is received, the trade server encryption/decryption module 20 of the trade server center 2 performs a decryption Da(Ea(Key41+S43+m4)) to the encrypted data Ea(Key41+S43+m4) via the asymmetrical single function decrypting method Da using its private key Key22, so as to obtain the public key Key41, the hardware serial number S43, and the user data m4 of the user end device 4. And prior to the making of the secure electronic commerce trade, the trade server encryption/decryption module 20 records the hardware serial number S43, the user data m4 of the user end device 4, and saves the public key Key41 of the user end device 4 correspondingly in order to complete the process of exchanging the public keys between the trade server center 2 and the user end device 4. The process then proceeds to step 614.

At step 614, a direction in which a trade data Msg is transmitted is determined to see whether the trade data Msg is transmitted from the user end device 4 to the trade server center 2 through the data transmission network 11, or the trade data Msg is transmitted from the trade server center 2 to the user end device 4 through the data transmission network. If the trade data Msg is transmitted from the user end device 4 to the trade server center 2 through the data transmission network 11, then process proceeds to the step 615. But, if the trade data Msg is transmitted from the trade server center 2 to the user end device 4 through the data transmission network 11, the process proceeds to step 619.

The trade data Msg is transmitted from the user end device 3 to the trade server center 2 through the network transmission network 11 at step 615. The encryption/decryption module 40 of the user end device 4 encrypts the trade data Msg into an encrypted trade data Es(Msg) via the symmetrical encrypting method Es using the hardware serial number S43 of the user end device 4. Then, the process proceeds to step 616.

At step 616, the encryption/decryption module 40 of the user end device 4 further encrypts the encrypted trade data Es(Msg) into a twice-encrypted trade data Ea(Es(Msg)) via the asymmetrical single function encrypting method Ea using the private key Key42 of the user end device 4. The twice-encrypted trade data Ea(Es(Msg)) is transmitted to the trade server center 2 through the data transmission network 11 before proceeding to step 617.

At step 617, after the trade server center 2 receives the twice-encrypted trade data Ea(Es(Msg)), the trade server center 2 performs a first decryption Da(Ea(Es(Msg))) to the twice-encrypted trade data Ea(Es(Msg)) to obtain the encrypted trade data Es(Msg) via the asymmetrical single function decrypting method Da using the saved public key Key41 of the user end device 4. Then, the process proceeds to step 618.

At step 618, after the first decryption, the trade server encryption/decryption module 20 performs a second decryption Ds(Es(Msg)) to the encrypted trade data Es(Msg) to obtain the trade data Msg and trade content via the symmetrical decrypting method Ds using the hardware serial number S43 of the user end device 4. Then, the process proceeds to step 623.

The trade data Msg is transmitted from the trade server center 2 to the user end device 4 through the network transmission network 11 at step 619. The trade server encryption/decryption module 20 of the trade server center 2 encrypts the trade data Msg into an encrypted trade data Es(Msg) via the symmetrical encrypting method Es using the hardware serial number S43 of the user end device 4. Then, the process proceeds to step 620.

At step 620, the trade server encryption/decryption module 20 of the trade server center 2 further encrypts the encrypted trade data Es(Msg) into a twice-encrypted trade data Ea(Es(Msg)) via the asymmetrical single function encrypting method Ea using the public key Key41 of the user end device 4. The twice-encrypted trade data Ea(Es(Msg)) is then transmitted from the trade server center 2 to the user end device 4 through the data transmission network 11 before proceeding to step 621.

At step 621, after user end device 4 receives the twice-encrypted trade data Ea(Es(Msg)), the encryption/decryption module 40 of the user end device 4 performs a first decryption Da(Ea(Es(Msg))) to the twice-encrypted trade data Ea(Es(Msg)) to obtain the encrypted trade data Es(Msg) via the asymmetrical single function decrypting method Da using the private key Key42 of the user end device 4. Then, the process proceeds to step 622.

At step 622, after the first decryption, the encryption/decryption module 40 performs a second decryption Ds(Es(Msg)) to the encrypted trade data Es(Msg) to obtain the trade data Msg and trade content via the symmetrical decrypting method Ds using the hardware serial number S43 of the user end device 3. Then, the process proceeds to step 623.

At step 623, if the secure electronic commerce trade is to be continued, then process returns to the step 614. Otherwise, the process proceeds to step 624.

At step 624, the secure electronic commerce trade is terminated.

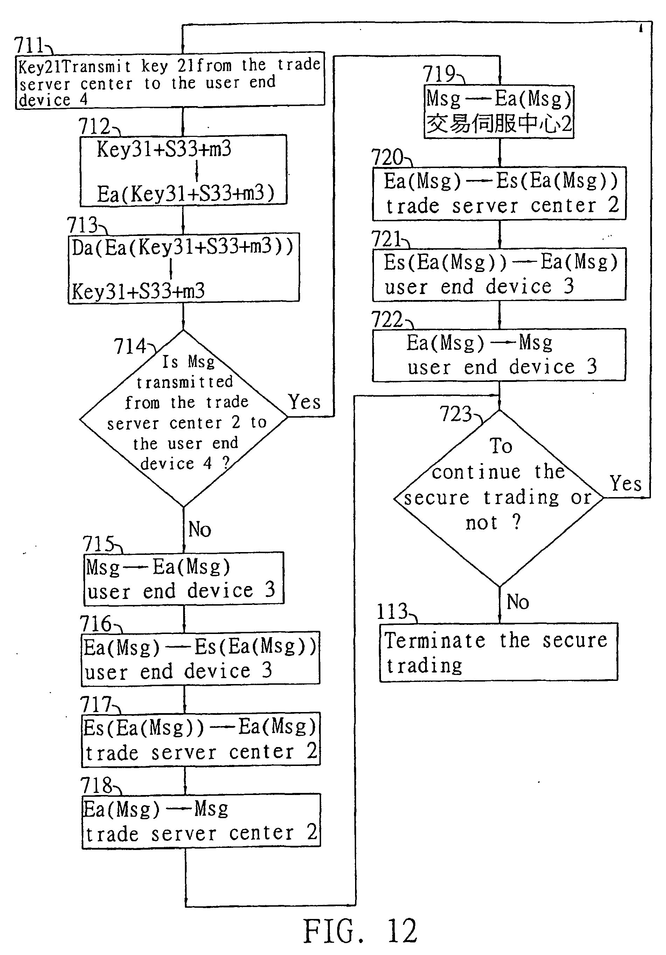

Fig. 12 is a flow chart illustrating implementation of the secure electronic commerce trade system the shown in Fig. 4 to execute another secure electronic commerce trade process. This embodiment is described with the user end device 3 as an example. The user end device 3 in this case includes a personal digital processor having a hardware serial number (such as a hardware serial number of substrate) or an electronic reader. And the data transmission network 11 may preferably be Internet or Intranet. Prior to the making of the secure electronic commerce trade, the trade server encryption/decryption module 20 of the trade server center 2 records the hardware serial number S33 and user information m3 of the user end device 3.

When the secure electronic commerce trade is taking place initially at step 711, the trade server center 2 is linked through the data transmission network 11 to the user end device 3. Then, the trade server encryption/decryption module 20 of the trade server center 2 transmits the public key Key21 of the trade server center 2 to the encryption/decryption module 30 of the user end device 3 through the data transmission network 11 before proceeding to step 712.

At step 712, the encryption/decryption module 30 encrypts the public key Key31, hardware serial number S33, and user information m3 of the user end device 3 via the asymmetrical single function encrypting method Ea using the public key Key21 of the trade server center 2, with the encrypted data being Ea(Key31+S33+m3). The encrypted data Ea(Key31+S33+m3) is then transmitted from the user end device 3 to the trade server center 2 through the data transmission network 11 before proceeding to step 713.

At step 713, after the encrypted data Ea(Key31+S33+m3) is received, the trade server encryption/decryption module 20 of the trade server center 2 performs a decryption Da(Ea(Key31+S33+m3)) to the encrypted data Ea(Key31+S33+m3) via the asymmetrical single function decrypting method Da using its private key Key22, so as to obtain the public key Key31, the hardware serial number S33, and the user data m3 of the user end device 3. And prior to the making of the secure electronic commerce trade, the trade server encryption/decryption module 20 records the hardware serial number S33, the user data m3 of the user end device 3, and saves the public key Key31 of the user end device 3 correspondingly in order to complete the process of exchanging the public keys between the trade server center 2 and the user end device 3. The process then proceeds to step 714.

At step 714, a direction in which a trade data Msg is transmitted is determined to see whether the trade data Msg is transmitted from the user end device 3 to the trade server center 2 through the data transmission network 11, or the trade data Msg is transmitted from the trade server center 2 to the user end device 3 through the data transmission network. If the trade data Msg is transmitted from the user end device 3 to the trade server center 2 through the data transmission network 11, then process proceeds to the step 715. But, if the trade data Msg is transmitted from the trade server center 2 to the user end device 3 through the data transmission network 11, the process proceeds to step 719.

The trade data Msg is transmitted from the user end device 3 to the trade server center 2 through the network transmission network 11 at step 715. The encryption/decryption module 30 of the user end device 3 encrypts the trade data Msg into an encrypted trade data Ea(Msg) via the asymmetrical single function encrypting method Ea using the private key Key32 of the user end device 3. Then, the process proceeds to step 716.

At step 716, the encryption/decryption module 30 of the user end device 3 further encrypts the encrypted trade data Ea(Msg) into a twice-encrypted trade data Es(Ea(Msg)) via the symmetrical encrypting method Es using the hardware serial number S33 of the user end device 3. The twice-encrypted trade data Es(Ea(Msg)) is transmitted to the trade server center 2 through the data transmission network 11 before proceeding to step 717.

At step 717, after the trade server center 2 receives the twice-encrypted trade data Es(Ea(Msg)), the trade server center 2 performs a first decryption Ds(Es(Ea(Msg))) to the twice-encrypted trade data Es(Ea(Msg)) to obtain the encrypted trade data Ea(Msg) via the symmetrical decrypting method Ds using the hardware serial number S33 of the user end device 3. Then, the process proceeds to step 718.

At step 718, after the first decryption, the trade server encryption/decryption module 20 performs a second decryption Da(Ea(Msg)) to the encrypted trade data Ea(Msg) to obtain the trade data Msg and trade content via the asymmetrical single function decrypting method Da using the public key Key31 of the user end device 3. Then, the process proceeds to step 723.

The trade data Msg is transmitted from the trade server center 2 to the user end device 3 through the network transmission network 11 at step 719. The trade server encryption/decryption module 20 of the trade server center 2 encrypts the trade data Msg into an encrypted trade data Ea(Msg) via the asymmetrical single function encrypting method Ea using the public key Key31 of the user end device 3. Then, the process proceeds to step 720.

At step 720, the trade server encryption/decryption module 20 further encrypts the encrypted trade data Ea(Msg) into a twice-encrypted trade data Es(Ea(Msg)) via the symmetrical encrypting method Es using the hardware serial number S33 of the user end device 3. The twice-encrypted trade data Es(Ea(Msg)) is then transmitted from the trade server center 2 to the user end device 3 through the data transmission network 11 before proceeding to step 721.

At step 721, after user end device 3 receives the twice-encrypted trade data Es(Ea(Msg)), the encryption/decryption module 30 of the user end device 3 performs a first decryption Ds(Es(Ea(Msg))) to the twice-encrypted trade data Es(Ea(Msg)) to obtain the encrypted trade data Ea(Msg) via the symmetrical decrypting method Ds using the hardware serial number S33 of the user end device 3. Then, the process proceeds to step 722.

At step 722, after the first decryption, the encryption/decryption module 30 performs a second decryption Da(Ea(Msg)) to the encrypted trade data Ea(Msg) to obtain the trade data Msg and trade content via the asymmetrical single function decrypting method Da using the private key Key32 of the user end device 3. Then, the process proceeds to step 723.

At step 723, if the secure electronic commerce trade is to be continued, then process returns to the step 714. Otherwise, the process proceeds to step 724.

At step 724, the secure electronic commerce trade is terminated.

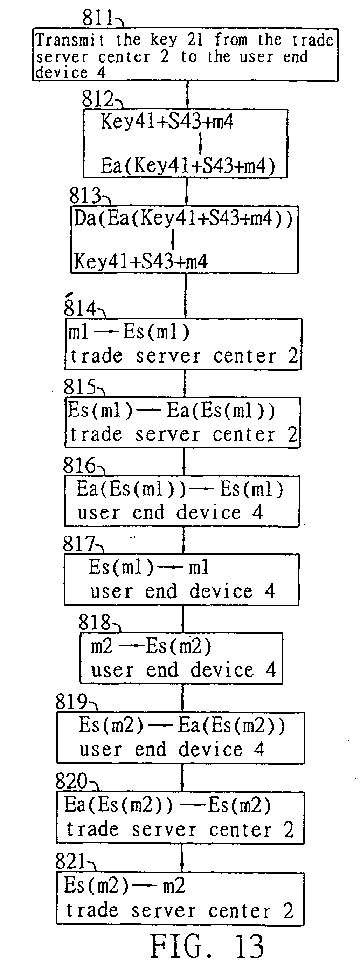

Fig. 13 is a flow chart illustrating execution of the secure electronic commerce trade process by implementing the secure electronic commerce trade system according to one embodiment of the present invention. In this embodiment, a first trade data ml is encrypted by the trade server encryption/decryption module 20 the trade server center 2 before transmitting the encrypted data to the encryption/decryption module 40 of the user end device 4. After the encryption/decryption module 40 receives the encrypted trade data, the encryption/decryption module 40 decrypts the encrypted trade data to obtain the first trade data ml. Next, as the encryption/decryption module 40 of the user end device 4 encrypts the second trade data m2, the encrypted trade data is transmitted to the trade server encryption/decryption module 20 of the trade server center 2. After trade server encryption/decryption module 20 receives the encrypted trade data, the encryption/decryption module 40 decrypts the encrypted trade data to obtain the first trade data m2, while the secure electronic commerce trade is terminated. The user end device 4 in this case is a personal computer (PC) having a hardware serial number (such as a hardware serial number of motherboard). And the data transmission network 11 may preferably be Internet or Intranet. Prior to the making of the secure electronic commerce trade, the trade server encryption/decryption module 20 of the trade server center 2 records the hardware serial number S43 and user information m4 of the user end device 4.

When the secure electronic commerce trade is taking place initially at step 811, the trade server center 2 is linked through the data transmission network 11 to the user end device 4. Then, the trade server encryption/decryption module 20 of the trade server center 2 transmits the public key Key21 of the trade server center 2 to the encryption/decryption module 40 of the user end device 4 through the data transmission network 11 before proceeding to step 812.

At step 812, the encryption/decryption module 40 encrypts the public key Key41, hardware serial number S43, and user information m4 of the user end device 4 via the asymmetrical single function encrypting method Ea using the public key Key21 of the trade server center 2, with the encrypted data being Ea(Key41+S43+m4). The encrypted data Ea(Key41+S43+m4) is then transmitted to the trade server center 2 through the data transmission network 11 before proceeding to step 813.

At step 813, after the encrypted data Ea(Key41+S43+m4) is received, the trade server encryption/decryption module 20 of the trade server center 2 performs a decryption Da(Ea(Key41+S43+m4)) to the encrypted data Ea(Key41+S43+m4) via the asymmetrical single function decrypting method Da using its private key Key22, so as to obtain the public key Key41, the hardware serial number S43, and the user data m4 of the user end device 4. And prior to the making of the secure electronic commerce trade, the trade server encryption/decryption module 20 records the hardware serial number S43, the user data m4 of the user end device 4, and saves the public key Key41 of the user end device 4 correspondingly in order to complete the process of exchanging the public keys between the trade server center 2 and the user end device 4. The process then proceeds to step 814.

At step 814, the first trade data ml is transmitted from the trade server center 2 to the user end device 4 through the network transmission network 11. The trade server encryption/decryption module 20 of the trade server center 2 encrypts the first trade data ml into an encrypted trade data Es(m1) via the symmetrical encrypting method Es using the hardware serial number S43 of the user end device 4. Then, the process proceeds to step 815.

At step 815, the trade server encryption/decryption module 20 of the trade server center 2 further encrypts the encrypted trade data Es(m1) into a twice-encrypted trade data Ea(Es(m1)) via the asymmetrical single function encrypting method Ea using the public key Key41 of the user end device 4. The twice-encrypted trade data Ea(Es(m1)) is transmitted to the user end device 4 through the data transmission network 11 before proceeding to step 816.

At step 816, after the user end device 4 receives the twice-encrypted trade data Ea(Es(ml)), the encryption/decryption module 40 of the user end device 4 performs a first decryption Da(Ea(Es(ml))) to the twice-encrypted trade data Ea(Es(ml)) to obtain the encrypted trade data Es(m1) via the asymmetrical single function decrypting method Da using the private key Key42 of the user end device 4. Then, the process proceeds to step 817.

At step 817, after the first decryption, the encryption/decryption module 40 performs a second decryption Ds(Es(m1)) to the encrypted trade data Es(m1) to obtain the trade data m1 and trade content via the symmetrical decrypting method Ds using the hardware serial number S43 of the user end device 4. Then, the process proceeds to step 818.

At step 818, the second trade data m2 is transmitted from the user end device 4 to the trade server center 2 through the network transmission network 11. The encryption/decryption module 40 of the user end device 4 encrypts the second trade data m2 into an encrypted trade data Es(m2) via the symmetrical encrypting method Es using the hardware serial number S43 of the user end device 4. Then, the process proceeds to step 819.

At step 819, the encryption/decryption module 40 of the user end device 4 further encrypts the encrypted trade data Es(m2) into a twice-encrypted trade data Ea(Es(m2)) via the asymmetrical single function encrypting method Ea using the private key Key42 of the user end device 4. The twice-encrypted trade data Ea(Es(m2)) is then transmitted to the trade server center 2 through the data transmission network 11 before proceeding to step 820.

At step 820, after the trade server center 2 receives the twice-encrypted trade data Ea(Es(m2)), the trade server encryption/decryption module 20 of the trade server center 2 performs a first decryption Da(Ea(Es(m2))) to the twice-encrypted trade data Ea(Es(m2)) to obtain the encrypted trade data Es(m2) via the asymmetrical single function decrypting method Da using the saved public key Key41 of the user end device 4. Then, the process proceeds to step 821.

At step 821, after the first decryption, the trade server encryption/decryption module 20 performs a second decryption Ds(Es(m2)) to the encrypted trade data Es(m2) to obtain the trade data m2 and trade content via the symmetrical decrypting method Ds using the hardware serial number S43 of the user end device 4, while the electronic commerce trade is terminated.

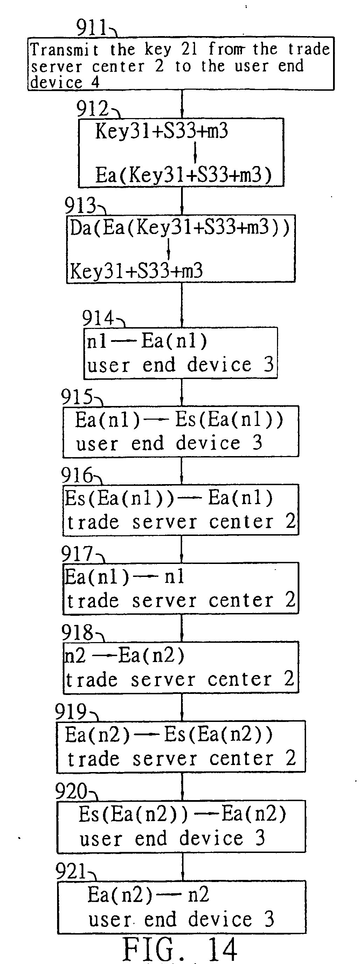

Fig. 14 is a flow chart illustrating execution of the secure electronic commerce trade process by implementing the secure electronic commerce trade system according to another embodiment of the present invention. In this embodiment, a first trade data n1 is encrypted by the encryption/decryption module 30 of the user end device 3 before transmitting the encrypted data to the trade server encryption/decryption module 20 of the trade server center 2. After the trade server encryption/decryption module 20 the trade server center 2 receives the encrypted trade data, the trade server encryption/decryption module 20 decrypts the encrypted trade data to obtain the first trade data n1. Next, the trade server encryption/decryption module 20 the trade server center 2 encrypts the second trade data n2 before transmitting the encrypted trade data to the encryption/decryption module 30 of the user end device 3. After the encryption/decryption module 30 of the user end device 3 receives the encrypted trade data, the encryption/decryption module 30 decrypts the encrypted trade data to obtain the first trade data n2, while the secure electronic commerce trade is terminated. The user end device 3 in this case includes a personal digital processor having a hardware serial number (such as a hardware serial number of substrate) or an electronic reader. And the data transmission network 11 may preferably be Internet or Intranet. Prior to the making of the secure electronic commerce trade, the trade server encryption/decryption module 20 of the trade server center 2 records the hardware serial number S33 and user information m3 of the user end device 3.

When the secure electronic commerce trade is taking place initially at step 911, the trade server center 2 is linked through the data transmission network 11 to the user end device 4. Then, the trade server encryption/decryption module 20 of the trade server center 2 transmits the public key Key21 of the trade server center 2 to the encryption/decryption module 30 of the user end device 3 through the data transmission network 11 before proceeding to step 912.

At step 912, the encryption/decryption module 30 encrypts the public key Key31, hardware serial number S33, and user information m3 of the user end device 3 via the asymmetrical single function encrypting method Ea using the public key Key21 of the trade server center 2, with the encrypted data being Ea(Key31+S33+m3). The encrypted data Ea(Key31+S33+m3) is then transmitted to the trade server center 2 through the data transmission network 11 before proceeding to step 913.

At step 913, after the encrypted data Ea(Key31+S33+m3) is received, the trade server encryption/decryption module 20 of the trade server center 2 performs a decryption Da(Ea(Key31+S33+m3)) to the encrypted data Ea(Key31+S33+m3) via the asymmetrical single function decrypting method Da using its private key Key22, so as to obtain the public key Key31, the hardware serial number S33, and the user data m3 of the user end device 3. And prior to the making of the secure electronic commerce trade, the trade server encryption/decryption module 20 records the hardware serial number S33, the user data m3 of the user end device 3, and saves the public key Key31 of the user end device 3 correspondingly in order to complete the process of exchanging the public keys between the trade server center 2 and the user end device 3. The process then proceeds to step 914.

At step 914, the first trade data n1 is transmitted from the user end device 3 to the trade server center 2 through the network transmission network 11. The encryption/decryption module 30 of the user end device 3 encrypts the first trade data n1 into an encrypted trade data Ea(n1) via the asymmetrical single function encrypting method Ea using the private key Key32 of the user end device 3. Then, the process proceeds to step 915.

At step 915, the encryption/decryption module 30 of the user end device 3 further encrypts the encrypted trade data Ea(n1) into a twice-encrypted trade data Es(Ea(n1)) via the symmetrical encrypting method Es using the hardware serial number S33 of the user end device 3. The twice-encrypted trade data Es(Ea(n1)) is transmitted to the trade server center 2 through the data transmission network 11 before proceeding to step 916.

At step 916, after the trade server center 2 receives the twice-encrypted trade data Es(Ea(n1)), the trade server encryption/decryption module 20 the trade server center 2 performs a first decryption Ds(Es(Ea(n1))) to the twice-encrypted trade data Es(Ea(n1)) to obtain the encrypted trade data Ea(n1) via the symmetrical decrypting method Ds using the hardware serial number S33 of the user end device 3. Then, the process proceeds to step 917.

At step 917, after the first decryption, the trade server encryption/decryption module 20 performs a second decryption Da(Ea(n1)) to the encrypted trade data Ea(n1) to obtain the trade data n1 and trade content via the asymmetrical single function decrypting method Da using the public key Key31 of the user end device 3. Then, the process proceeds to step 918.

At step 918, the second trade data n2 is transmitted from the trade server center 2 to the user end device 3 through the network transmission network 11. The trade server encryption/decryption module 20 of the trade server center 2 encrypts the second trade data n2 into an encrypted trade data Ea(n2) via the asymmetrical single function encrypting method Ea using the public key Key31 of the user end device 3. Then, the process proceeds to step 919.

At step 919, the trade server encryption/decryption module 20 of the trade server center 2 further encrypts the encrypted trade data Ea(n2) into a twice-encrypted trade data Es(Ea(n2)) via the symmetrical encrypting method Es using the hardware serial number S33 of the user end device 3. The twice-encrypted trade data Es(Ea(n2)) is then transmitted from the trade server center 2 to the user end device 3 through the data transmission network 11 before proceeding to step 920.

At step 920, after the user end device 3 receives the twice-encrypted trade data Es(Ea(n2)), the encryption/decryption module 30 of the user end device 3 performs a first decryption Ds(Es(Ea(n2))) to the twice-encrypted trade data Es(Ea(n2)) to obtain the encrypted trade data Ea(n2) via the asymmetrical single function decrypting method Ds using the hardware serial number S33 of the user end device 3. Then, the process proceeds to step 921.

At step 921, after the first decryption, the encryption/decryption module 30 performs a second decryption Da(Ea(n2)) to the encrypted trade data Ea(n2) to obtain the second trade data n2 and trade content via the asymmetrical single function decrypting method Da using the private key Key32 of the user end device 3, while the electronic commerce trade is terminated.

Summarizing from the above embodiment, it is understood that the present invention provides a network customer service system and method for the same, applicable to an Internet environment. According to the present invention, the network customer service system and the method for the same provide following advantages.

The invention has been described using exemplary preferred embodiments. However, it is to be understood that the scope of the invention is not limited to the disclosed embodiments.

## Claims

1. A method for secure electronic commerce trade (e-commerce), applicable to a network environment for online trading, for use in a secure e-commerce trade system comprising a trade server center (2), a data transmission network (11), and a user end device (3, 4), wherein the user end-device (3,4) has a unique hardware serial number (33, 43), the method comprising the steps of:
(1) establishing a network connection between the trade server center (2) and the user end device (3, 4) via the data transmission network (11) wherein the trade server center (2) and the user end device (3, 4) exchange their respective public keys (21, 31, 41) with each other through the data transmission network (11);
(2) with completion of exchange of the public keys (21, 31, 41) between the trade server center (2) and the user end device (3, 4), encrypting/decrypting trade data in a symmetric manner through the use of said hardware serial number (33, 43) and via an asymmetric single function through the use of the public key (31, 41) and a private key (32, 42) of the user end device (3, 4) to perform secure e-commerce trade; wherein the step (2) of encrypting/decrypting the trade data comprises the sub-steps of:
(2-1) determining a transmission direction for trade data; if the trade data intended to be transmitted from the user end device (3, 4) via the data transmission network (11) to the trade server center (2), performing sub-step (2-2); if the trade data intended to be transmitted from the trade server center (2) via the data transmission network (11) to the user end device (3, 4), performing sub-step (2-4);
(2-2) in the case of the trade data intended to be transmitted from the user end device (3, 4) to the trade server center (2), having the user end device (3, 4) encrypt the trade data in a symmetric manner through the use of said hardware serial number (33, 43) and via an asymmetric single function through the use of the private key (32, 42) to form twice-encrypted trade data, and transmit the twice-encrypted trade data via the data transmission network (11) to the trade server center (2); then, performing sub-step (2-3);
(2-3) upon receiving the twice-encrypted trade data from the user end device (3, 4), having the trade server center (2) decrypt the twice-encrypted trade data in a symmetric manner through the use of said hardware serial number (33, 43) and via an asymmetric single function through the use of the stored public key (31, 41) to obtain contents of the trade data; then, performing sub-step (2-6);
(2-4) in the case of the trade data intended to be transmitted from the trade server center (2) to the user end device (3, 4), having the trade server center (2) encrypt the trade data in a symmetric manner through the use of said hardware serial number (33, 43) and via an asymmetric single function through the use of the public key (31, 41) of the user end device (3, 4) to form twice-encrypted trade data, and transmit the twice-encrypted trade data via the data transmission network (11) to the user end device (3, 4);
(2-5) upon receiving the twice-encrypted trade data from the trade server center (2) having the user end device (3, 4) decrypt the twice-encrypted trade data in a symmetric manner through the use of said hardware serial number (33, 43), and via an asymmetric single function through the use of the private key (32, 42) to obtain contents of the trade data; and
(2-6) with completion of decryption of the trade data to obtain contents of the trade data, determining if the secure e-commerce trade is to be continued; if yes, returning to sub-step (2-1); if no, performing step (3); and
(3) terminating the secure e-commerce trade.

2. The method of claim 1, wherein the step (1) comprises the sub-steps of:
(1-1) with the network connection being established between the trade server center (2) and the user end device (3, 4), having the trade server center (2) transmit a public key (21) thereof via the data transmission network (11) to the user end device (3, 4);
(1-2) upon receiving the public key (21) from the trade server center (2), having the user end device (3, 4) encrypt a public key (31, 41), a hardware serial number (33, 43) and user's personal information thereof via an asymmetric single function through the use of the public key (21) of the trade server center (2), and transmit the encrypted data to the trade server center (2) via the data transmission network (11); and
(1-3) upon receiving the encrypted data from the user end device (3, 4), having the trade server center (2) decrypt the encrypted data via an asymmetric single function through the use of a private key (22) of the trade server center (2), to obtain the public key (31, 41), hardware serial number (33, 43) and user's personal information of the user end device (3, 4), and record the obtained hardware serial number (33, 43) and user's personal information as well as store the public key (31,41) of the user end device (3, 4), such that exchange of the public keys (21, 31, 41) between the trade server center (2) and the user end device (3, 4) is completed.

3. The method of claim 1, wherein in the sub-step (2-2), the user end device (3, 4) performs a first encryption process to symmetrically encrypt the trade data, intended to be transmitted to the trade server center (2), through the use of the hardware serial number (33, 43) of the user end device (3, 4), and then the user end device (3, 4) performs a second encryption process to further encrypt the encrypted trade data via an asymmetric single function through the use of the private key (32, 42) thereof, so as to transmit the twice-encrypted trade data via the data transmission network (11) to the trade server center (2).

4. The method of claim 3, wherein in the sub-step (2-3), the trade server center (2) decrypts the twice-encrypted trade data from the user end device (3, 4) via an asymmetric single function through the use of the public key (31, 41) of the user end device (3, 4), and then the trade server center (2) further symmetrically decrypts the trade data through the use of the hardware serial number (33, 43) of the user end device (3, 4) to obtain contents of the trade data.

5. The method of claim I, wherein in the sub-step (2-2), the user end device (3, 4) performs a first encryption process to encrypt the trade data, intended to be transmitted to the trade server center (2), via an asymmetric single function through the use of the private key (32, 42) of the user end device (3, 4), and then the user end device (3, 4) performs a second encryption process to further symmetrically encrypt the encrypted trade data through the use of the hardware serial number (33, 43) thereof, so as to transmit the twice-encrypted trade data via the data transmission network (11) to the trade server center (2).

6. The method of claim 5, wherein in the sub-step (2-3), the trade server center (2) symmetrically decrypts the twice-encrypted trade data from the user end device (3, 4) through the use of the hardware serial number (33, 43) of the user end device (3, 4), and then the trade server center (2) further decrypts the trade data via an asymmetric single function through the use of the public key (31, 41) of the user end device (3, 4) to obtain contents of the trade data.

7. The method of claim 1, wherein in the sub-step (2-4), the trade server center (2) performs a first encryption process to symmetrically encrypt the trade data, intended to be transmitted to the user end device (3, 4), through the use of the hardware serial number (33, 43) of the user end device (3, 4), and then the trade server center (2) performs a second encryption process to further encrypt the encrypted trade data via an asymmetric single function through the use of the public key (31, 41) of the user end device (3, 4), so as to transmit the twice-encrypted trade data via the data transmission network (11) to the user end device (3, 4).

8. The method of claim 7, wherein in the sub-step (2-5), the user end device (3, 4) decrypts the twice-encrypted trade data from the trade server center (2) via an asymmetric single function through the use of the private key (32, 42) of the user end device (3, 4), and then the user end device (3, 4) further symmetrically decrypts the trade data through the use of the hardware serial number (33, 43) thereof to obtain contents of the trade data.

9. The method of claim 1, wherein in the sub-step (2-4), the trade server center (2) performs a first encryption process to encrypt the trade data, intended to be transmitted to the user end device (3, 4), via an asymmetric single function through the use of the public key (31, 41) of the user end device (3, 4), and then the trade server center (2) performs a second encryption process to further symmetrically encrypt the encrypted trade data through the use of the hardware serial number (33, 43) of the user end device (3, 4), so as to transmit the twice-encrypted trade data via the data transmission network (11) to the user end device (3, 4).

10. The method of claim 9, wherein in the sub-step (2-5), the user end device (3, 4) symmetrically decrypts the twice-encrypted trade data from the trade server center (2) through the use of the hardware serial number (33, 43) of the user end device (3, 4), and then the user end device (3, 4) further decrypts the trade data via an asymmetric single function through the use of the private key (32, 42) thereof to obtain contents of the trade data.

11. The method of claim 2, wherein the step (2) comprises the sub-steps of:
(2-1) with completion of exchange of the public keys (21, 31, 41) between the trade server center (2) and the user end device (3, 4), for transmitting first trade data from the trade server center (2) to the user end device (3, 4), having the trade server center (2) encrypt the first trade data in a symmetric manner and via an asymmetric single function through the use of the hardware serial number (33, 43) and public key (31, 41) of the user end device (3, 4), and transmit the encrypted first trade data via the data transmission network (11) to the user end device (3, 4);
(2-2) upon receiving the encrypted first trade data from the trade server center (2), having the user end device (3, 4) decrypt the encrypted first trade data in a symmetric manner and via an asymmetric single function through the use of the private key (32, 42) and hardware serial number (33, 43) thereof to obtain contents of the first trade data;
(2-3) for transmitting second trade data from the user end device (3, 4) to the trade server center (2), having the user end device (3, 4) encrypt the second trade data in a symmetric and via an asymmetric single function through the use of the hardware serial number (33, 43) and private key (32, 42) thereof, and transmit the encrypted second trade data via the data transmission network (11) to the trade server center (2);
(2-4) upon receiving the encrypted second trade data from the user end device (3, 4), having the trade server center (2) decrypt the encrypted second trade data in a symmetric manner and via an asymmetric single function through the use of the public key (31, 41) and hardware serial number (33, 43) of the user end device (3, 4) to obtain contents of the second trade data; and
(2-5) terminating the secure e-commerce trade when contents of the second trade data are obtained.

12. The method of claim 2, wherein the step (2) comprises the sub-steps of:
(2-1) with completion of exchange of the public keys (21, 31, 41) between the trade server center (2) and the user end device (3, 4), for transmitting first trade data from the user end device (3, 4) to the trade server center (2), having the user end device (3, 4) encrypt the first trade data in a symmetric manner and via an asymmetric single function through the use of the hardware serial number (33, 43) and private key (32, 42) thereof, and transmit the encrypted first trade data via the data transmission network (11) to the trade server center (2);
(2-2) upon receiving the encrypted first trade data from the user end device (3, 4), having the trade server center (2) decrypt the encrypted first trade data in a symmetric manner and via an asymmetric single function through the use of the public key (31, 41) and hardware serial number (33, 43) of the user end device (3, 4) to obtain contents of the first trade data;
(2-3) for transmitting second trade data from the trade server center (2) to the user end device (3, 4), having the trade server center (2) encrypt the second trade data in a symmetric manner and via an asymmetric single function through the use of the hardware serial number (33, 43) and public key (31, 41) of the user end device (3, 4), and transmit the encrypted second trade data via the data transmission network (11) to the user end device (3, 4);
(2-4) upon receiving the encrypted second trade data from the trade server center (2), having the user end device (3, 4) decrypt the encrypted second trade data in a symmetric manner and via an asymmetric single function through the use of the private key (32, 42) and hardware serial number (33, 43) thereof to obtain contents of the second trade data; and
(2-5) terminating the secure e-commerce trade when contents of the second trade data are obtained.

13. The method of claim 1, wherein the data transmission network (11) is Internet or Intranet.

14. The method of claim 1, wherein the user end device (3, 4) is a personal computer (PC), personal digital assistance (PDA), or electronic reader.

15. A system for secure electronic commerce (e-commerce) trade, comprising:
a trade server center (2) serving a server platform for the secure e-commerce trade, for recording a hardware serial number (33, 43) and user's personal information of at least one user end device (3, 4) and storing a public key (21) and a private key (22) of the trade server center (2) and a public key (31, 41) of the user end device (3, 4), and for encrypting/decrypting trade data in a symmetric manner and via an asymmetrical single function;
a data transmission network (11) for transmitting data to allow trade performance between the trade server center (2) and the user end device (3, 4);
at least one user end device (3, 4) for storing a hardware serial number (33, 43), public key (31, 41) and private key (32, 42) thereof and the public key (21) of the trade server center (2), the hardware serial number (33, 43) being unique for the user end device (3, 4), and for encrypting/decrypting the trade data in a symmetric manner and via an asymmetrical single function;
a trade server encryption/decryption module (20) in the trade server center (2), wherein the trade server encryption/decryption module (20) and the user end device (3, 4) exchange their respective public keys (21, 31, 41) with each other via the data trans- mission network (11) wherein during performance of the secure e-commerce trade,
the trade server encryption/decryption module (20) encrypts the trade data in a sym- metric manner through the use of the hardware serial number (33, 43) of the user end device (3, 4) and via an asymmetrical single function through the use of the public key (31, 41) of the user end device (3, 4), while the trade server encryption/decryption module (20) decrypts the encrypted trade data via an asymmetrical single function through the use of the public key (31,41) of the user end device (3,4) and in a symmetric manner through the use of the hardware serial number (33, 43) of the user end device (3,4), so that the trade server encryption/decryption module (20) is arranged to twice encrypt the trade data, and to decrypt twice encrypted trade data, an encryption/decryption module (30, 40) in the user end device (3, 4), wherein the encryption/decryption module (30, 40) and the trade server center (2) exchange their respective public keys (21, 31, 41) with each other via the data transmission network (11); wherein during performance of the secure e-commerce trade, the en- cryption/decryption module (30, 40) encrypts the trade data in a symmetric manner through the use of the hardware serial number (33, 43) of the user end device (3,4) and via an asymmetrical single function through the use of the private key (32, 42) of the user end device (3, 4), while the encryption/decryption module (30, 40) de crypts the encrypted trade data via an asymmetrical single function through the use of the private key (32 42) of the user end device (3, 4) and in a symmetric manner through the use of the hardware serial number (33, 43) of the user end device (3,4)so that the encryption/decryption module (30, 40) in the user end device is arranged to twice encrypt the trade data, and to decrypt twice encrypted trade data.

16. The system of claim 15, wherein with the user end device (3, 4) being linked to the trade server center (2) via the data transmission network (11), the user end device (3, 4) obtains the public key (21) of the trade server center (2) and encrypts the public key (31, 41), hardware serial number (33, 43) and user's personal information thereof via an asymmetrical single function through the use of the public key (21) of the trade server center (2), allowing the encrypted data to be transmitted via the data transmission network (11) to the trade server center (2); upon receiving the encrypted data from the user end device (3, 4), the trade server center (2) decrypts the encrypted data via an asymmetrical single function through the use of the private key (22) thereof to obtain the public key (31, 41), hardware serial number (33, 43) and user's personal information of the user end device (3, 4); and the trade server center (2) records the hardware serial number (33, 43) and user's personal information of the user end device (3, 4) and stores the pubic key (31, 41) of the user end device (3, 4) prior to performing the secure e-commerce trade.

## Patentansprüche

1. Verfahren für einen sicheren Electronic-Commerce-Handel (E-Commerce), das auf eine Netzwerkumgebung für einen Online-Handel anwendbar ist, zur Verwendung in einem sicheren E-Commerce-Handel-System, das eine Handel-Server-Zentrale (2), ein Datenübertragungsnetzwerk (11) und eine Endverbrauchereinrichtung (3, 4) umfasst, wobei die Endverbrauchereinrichtung (3, 4) eine eindeutige Hardware-Seriennummer (33, 43) aufweist, und das Verfahren die Schritte umfasst:
(1) Herstellen einer Netzwerkverbindung zwischen der Handel-Server-Zentrale (2) und der Endverbrauchereinrichtung (3, 4) über das Datenübertragungsnetzwerk (11), wobei die Handel-Server-Zentrale (2) und die Endverbrauchereinrichtung (3, 4) ihre jeweiligen öffentlichen Schlüssel (21, 31, 41) über das Datenübertragungsnetzwerk (11) miteinander austauschen;
(2) Verschlüsseln/Entschlüsseln von Handelsdaten auf eine symmetrische Art und Weise durch die Verwendung der Hardware-Seriennummer (33, 43) und über eine asymmetrische einzelne Funktion durch die Verwendung des öffentlichen Schlüssels (31, 41) und eines privaten Schlüssels (32, 42) der Endverbrauchereinrichtung (3, 4) nach dem Abschluss des Austauschs der öffentlichen Schlüssel (21, 31, 41) zwischen der Handel-Server-Zentrale (2) und der Endverbrauchereinrichtung (3, 4), um einen sicheren E-Commerce-Handel durchzuführen; wobei der Schritt (2) des Verschlüsselns/Entschlüsselns der Handelsdaten die folgenden Unterschritte umfasst:
(2-1) Bestimmen einer Übertragungsrichtung der Handelsdaten; wenn die Handelsdaten von der Endverbrauchereinrichtung (3, 4) über das Datenübertragungsnetzwerk (11) an die Handel-Server-Zentrale (2) übertragen werden sollen, Ausführen von Unterschritt (2-2); wenn die Handelsdaten von der Handel-Server-Zentrale (2) über das Datenübertragungsnetzwerk (11) an die Endverbrauchereinrichtung (3, 4) übertragen werden sollen, Ausführen von Unterschritt (2-4);
(2-2) in dem Fall, dass die Handelsdaten von der Endverbrauchereinrichtung (3, 4) an die Handel-Server-Zentrale (2) übertragen werden sollen, Veranlassen, dass die an Endverbrauchereinrichtung (3, 4) die Handelsdaten auf eine symmetrische Art und Weise durch die Verwendung der Hardware-Seriennummer (33, 43) und über eine asymmetrische einzelne Funktion durch die Verwendung des privaten Schlüssels (32, 42) verschlüsselt, um zweifach verschlüsselte Handelsdaten zu bilden, und die zweifach verschlüsselten Handelsdaten über das Datenübertragungsnetzwerk (11) an die Handel-Server-Zentrale (2) überträgt; dann Ausführen von Unterschritt (2-3);
(2-3) auf ein Empfangen der zweifach verschlüsselten Handelsdaten von der Endverbrauchereinrichtung (3, 4) Veranlassen, dass die Handel-Server-Zentrale (2) die zweifach verschlüsselten Handelsdaten auf eine symmetrische Art und Weise durch die Verwendung der Hardware-Seriennummer (33, 43) und über eine asymmetrische einzelne Funktion durch die Verwendung des gespeicherten öffentlichen Schlüssels (31, 41) entschlüsselt, um Inhalte der Handelsdaten zu erhalten; dann Ausführen von Unterschritt (2-6);
(2-4) in dem Fall, dass die Handelsdaten von der Handel-Server-Zentrale (2) an die Endverbrauchereinrichtung (3, 4) übertragen werden sollen, Veranlassen, dass die Handel-Server-Zentrale (2) die Handelsdaten auf eine symmetrische Art und Weise durch die Verwendung der Hardware-Seriennummer (33, 43) und über eine asymmetrische einzelne Funktion durch die Verwendung des öffentlichen Schlüssels (31, 41) der Endverbrauchereinrichtung (3, 4) verschlüsselt, um zweifach verschlüsselte Handelsdaten zu bilden, und die zweifach verschlüsselten Handelsdaten über das Datenübertragungsnetzwerk (11) an die Endverbrauchereinrichtung (3, 4) überträgt;
(2-5) auf ein Empfangen der zweifach verschlüsselten Handelsdaten von der Handel-Server-Zentrale (2) Veranlassen, dass die Endverbrauchereinrichtung (3, 4) die zweifach verschlüsselten Handelsdaten auf eine symmetrische Art und Weise durch die Verwendung der Hardware-Seriennummer (33, 43) und über eine asymmetrische einzelne Funktion durch die Verwendung des privaten Schlüssels (32, 42) entschlüsselt, um Inhalte der Handelsdaten zu erhalten; und
(2-6) nach dem Abschluss des Entschlüsselns der Handelsdaten, um Inhalte der Handelsdaten zu erhalten, Bestimmen, ob der sichere E-Commerce-Handel fortgeführt werden soll; wenn ja, Zurückkehren zu Unterschritt (2-1); wenn nein, Ausführen von Schritt (3); und
(3) Beenden des sicheren E-Commerce-Handels.

2. Verfahren nach Anspruch 1, wobei der Schritt (1) die Unterschritte umfasst:
(1-1) Veranlassen, dass die Handel-Server-Zentrale (2) einen öffentlichen Schlüssel (21) von dieser über das Datenübertragungsnetzwerk (11) an die Endverbrauchereinrichtung (3, 4) überträgt, nachdem die Netzwerkverbindung zwischen der Handel-Server-Zentrale (2) und der Endverbrauchereinrichtung (3, 4) hergestellt ist;
(1-2) auf ein Empfangen des öffentlichen Schlüssels (21) von der Handel-Server-Zentrale (2) Veranlassen, dass die Endverbrauchereinrichtung (3, 4) einen öffentlichen Schlüssel (31, 41), eine Hardware-Seriennummer (33, 43) und persönliche Informationen des Anwenders von dieser über eine asymmetrische einzelne Funktion durch die Verwendung des öffentlichen Schlüssels (21) der Handel-Server-Zentrale (2) verschlüsselt, und die verschlüsselten Daten über das Datenübertragungsnetzwerk (11) an die Handel-Server-Zentrale (2) überträgt; und
(1-3) auf ein Empfangen der verschlüsselten Daten von der Endverbrauchereinrichtung (3, 4) Veranlassen, dass die Handel-Server-Zentrale (2) die verschlüsselten Daten über eine asymmetrische einzelne Funktion durch die Verwendung eines privaten Schlüssels (22) der Handel-Server-Zentrale (2) entschlüsselt, um den öffentlichen Schlüssel (31, 41), die Hardware-Seriennummer (33, 43) und die persönlichen Informationen des Anwenders von der Endverbrauchereinrichtung (3, 4) zu erhalten, und die erhaltene Hardware-Seriennummer (33, 43) und die persönlichen Informationen des Anwenders aufzeichnet sowie den öffentlichen Schlüssel (31, 41) der Endverbrauchereinrichtung (3, 4) speichert, so dass der Austausch der öffentlichen Schlüssel (21, 31, 41) zwischen der Handel-Server-Zentrale (2) und der Endverbrauchereinrichtung (3, 4) abgeschlossen wird.

3. Verfahren nach Anspruch 1, wobei in dem Unterschritt (2-2) die Endverbrauchereinrichtung (3, 4) einen ersten Verschlüsselungsprozess durchführt, um die Handelsdaten, die an die Handel-Server-Zentrale (2) übertragen werden sollen, durch die Verwendung der Hardware-Seriennummer (33, 43) der Endverbrauchereinrichtung (3, 4) symmetrisch zu verschlüsseln, und die Endverbrauchereinrichtung (3, 4) dann einen zweiten Verschlüsselungsprozess durchführt, um die verschlüsselten Handelsdaten über eine asymmetrische einzelne Funktion durch die Verwendung des privaten Schlüssels (32, 42) von dieser weiter zu verschlüsseln, um die zweifach verschlüsselten Handelsdaten über das Datenübertragungsnetzwerk (11) an die Handel-Server-Zentrale (2) zu übertragen.

4. Verfahren nach Anspruch 3, wobei in dem Unterschritt (2-3) die Handel-Server-Zentrale (2) die zweifach verschlüsselten Handelsdaten von der Endverbrauchereinrichtung (3, 4) über eine asymmetrische einzelne Funktion durch die Verwendung des öffentlichen Schlüssels (31, 41) der Endverbrauchereinrichtung (3, 4) entschlüsselt, und die Handel-Server-Zentrale (2) dann die Handelsdaten durch die Verwendung der Hardware-Seriennummer (33, 43) der Endverbrauchereinrichtung (3, 4) weiter symmetrisch entschlüsselt, um Inhalte der Handelsdaten zu erhalten.

5. Verfahren nach Anspruch 1, wobei in dem Unterschritt (2-2) die Endverbrauchereinrichtung (3, 4) einen ersten Verschlüsselungsprozess durchführt, um die Handelsdaten, die zu der Handel-Server-Zentrale (2) übertragen werden sollen, über eine asymmetrische einzelne Funktion durch die Verwendung des privaten Schlüssels (32, 42) der Endverbrauchereinrichtung (3, 4) zu verschlüsseln, und die Endverbrauchereinrichtung (3, 4) dann einen zweiten Verschlüsselungsprozess durchführt, um die verschlüsselten Handelsdaten durch die Verwendung der Hardware-Seriennummer (33, 43) von dieser weiter symmetrisch zu verschlüsseln, um die zweifach verschlüsselten Handelsdaten über das Datenübertragungsnetzwerk (11) an die Handel-Server-Zentrale (2) zu übertragen.

6. Verfahren nach Anspruch 5, wobei in dem Unterschritt (2-3) die Handel-Server-Zentrale (2) die zweifach verschlüsselten Handelsdaten von der Endverbrauchereinrichtung (3, 4) durch die Verwendung der Hardware-Seriennummer (33, 43) der Endverbrauchereinrichtung (3, 4) symmetrisch entschlüsselt, und die Handel-Server-Zentrale (2) dann die Handelsdaten über eine asymmetrische einzelne Funktion durch die Verwendung des öffentlichen Schlüssels (31, 41) der Endverbrauchereinrichtung (3, 4) weiter entschlüsselt, um Inhalte der Handelsdaten zu erhalten.

7. Verfahren nach Anspruch 1, wobei in dem Unterschritt (2-4) die Handel-Server-Zentrale (2) einen ersten Verschlüsselungsprozess durchführt, um die Handelsdaten, die an die Endverbrauchereinrichtung (3, 4) übertragen werden sollen, durch die Verwendung der Hardware-Seriennummer (33, 43) der Endverbrauchereinrichtung (3, 4) symmetrisch zu verschlüsseln, und die Handel-Server-Zentrale (2) dann einen zweiten Verschlüsselungsprozess durchführt, um die verschlüsselten Handelsdaten über eine asymmetrische einzelne Funktion durch die Verwendung des öffentlichen Schlüssels (31, 41) der Endverbrauchereinrichtung (3, 4) weiter zu verschlüsseln, um die zweifach verschlüsselten Handelsdaten über das Datenübertragungsnetzwerk (11) an die Endverbrauchereinrichtung (3, 4) zu übertragen.

8. Verfahren nach Anspruch 7, wobei in dem Unterschritt (2-5) die Endverbrauchereinrichtung (3, 4) die zweifach verschlüsselten Handelsdaten von der Handel-Server-Zentrale (2) über eine asymmetrische einzelne Funktion durch die Verwendung des privaten Schlüssels (32, 42) der Endverbrauchereinrichtung (3, 4) entschlüsselt, und die Endverbrauchereinrichtung (3, 4) dann die Handelsdaten durch die Verwendung der Hardware-Seriennummer (33, 43) von dieser weiter symmetrisch entschlüsselt, um Inhalte der Handelsdaten zu erhalten.

9. Verfahren nach Anspruch 1, wobei in dem Unterschritt (2-4) die Handel-Server-Zentrale (2) einen ersten Verschlüsselungsprozess durchführt, um die Handelsdaten, die an die Endverbrauchereinrichtung (3, 4) übertragen werden sollen, über eine asymmetrische einzelne Funktion durch die Verwendung des öffentlichen Schlüssels (31, 41) der Endverbrauchereinrichtung (3, 4) zu verschlüsseln, und die Handel-Server-Zentrale (2) dann einen zweiten Verschlüsselungsprozess durchführt, um die verschlüsselten Handelsdaten durch die Verwendung der Hardware-Seriennummer (33, 43) der Endverbrauchereinrichtung (3, 4) weiter symmetrisch zu verschlüsseln, um die zweifach verschlüsselten Handelsdaten über das Datenübertragungsnetzwerk (11) an die Endverbrauchereinrichtung (3, 4) zu übertragen.

10. Verfahren nach Anspruch 9, wobei in dem Unterschritt (2-5) die Endverbrauchereinrichtung (3, 4) die zweifach verschlüsselten Handelsdaten von der Handel-Server-Zentrale (2) durch die Verwendung der Hardware-Seriennummer (33, 43) der Endverbrauchereinrichtung (3, 4) symmetrisch entschlüsselt, und die Endverbrauchereinrichtung (3, 4) dann die Handelsdaten über eine asymmetrische einzelne Funktion durch die Verwendung des privaten Schlüssels (32, 42) von dieser weiter entschlüsselt, um Inhalte der Handelsdaten zu erhalten.

11. Verfahren nach Anspruch 2, wobei der Schritt (2) die Unterschritte umfasst:
(2-1) nach dem Abschluss des Austauschs der öffentlichen Schlüssel (21, 31, 41) zwischen der Handel-Server-Zentrale (2) und der Endverbrauchereinrichtung (3, 4), um erste Handelsdaten von der Handel-Server-Zentrale (2) an die Endverbrauchereinrichtung (3, 4) zu übertragen, Veranlassen, dass die Handel-Server-Zentrale (2) die ersten Handelsdaten auf eine symmetrische Art und Weise und über eine asymmetrische einzelne Funktion durch die Verwendung der Hardware-Seriennummer (33, 43) und des öffentlichen Schlüssels (31, 41) der Endverbrauchereinrichtung (3, 4) verschlüsselt, und die verschlüsselten ersten Handelsdaten über das Datenübertragungsnetzwerk (11) an die Endverbrauchereinrichtung (3, 4) überträgt;
(2-2) auf ein Empfangen der verschlüsselten ersten Handelsdaten von der Handel-Server-Zentrale (2) Veranlassen, dass die Endverbrauchereinrichtung (3, 4) die verschlüsselten ersten Handelsdaten auf eine symmetrische Art und Weise und über eine asymmetrische einzelne Funktion durch die Verwendung des privaten Schlüssels (32, 42) und die Hardware-Seriennummer (33, 43) von dieser entschlüsselt, um Inhalte der ersten Handelsdaten zu erhalten;
(2-3) um zweite Handelsdaten von der Endverbrauchereinrichtung (3, 4) an die Handel-Server-Zentrale (2) zu übertragen, Veranlassen, dass die Endverbrauchereinrichtung (3, 4) die zweiten Handelsdaten auf eine symmetrische Art und Weise und über eine asymmetrische einzelne Funktion durch die Verwendung der Hardware-Seriennummer (33, 43) und eines privaten Schlüssels (32, 42) von dieser verschlüsselt, und die verschlüsselten zweiten Handelsdaten über das Datenübertragungsnetzwerk (11) an die Handel-Server-Zentrale (2) überträgt;
(2-4) auf ein Empfangen der verschlüsselten zweiten Handelsdaten von der Endverbrauchereinrichtung (3, 4) Veranlassen, dass die Handel-Server-Zentrale (2) die verschlüsselten zweiten Handelsdaten auf eine symmetrische Art und Weise und über eine asymmetrische einzelne Funktion durch die Verwendung des öffentlichen Schlüssels (31, 41) und die Hardware-Seriennummer (33, 43) der Endverbrauchereinrichtung (3, 4) entschlüsselt, um Inhalte der zweiten Handelsdaten zu erhalten; und
(2-5) Beenden des sicheren E-Commerce-Handels, wenn Inhalte der zweiten Handelsdaten erhalten werden.

12. Verfahren nach Anspruch 2, wobei der Schritt (2) die Unterschritte umfasst:
(2-1) nach dem Abschluss des Austauschs der öffentlichen Schlüssel (21, 31, 41) zwischen der Handel-Server-Zentrale (2) und der Endverbrauchereinrichtung (3, 4), um erste Handelsdaten von der Endverbrauchereinrichtung (3, 4) an die Handel-Server-Zentrale (2) zu übertragen, Veranlassen, dass die Endverbrauchereinrichtung (3, 4) die ersten Handelsdaten auf eine symmetrische Art und Weise und über eine asymmetrische einzelne Funktion durch die Verwendung der Hardware-Seriennummer (33, 43) und des privaten Schlüssels (32, 42) von dieser verschlüsselt, und die verschlüsselten ersten Handelsdaten über das Datenübertragungsnetzwerk (11) an die Handel-Server-Zentrale (2) überträgt;
(2-2) auf ein Empfangen der verschlüsselten ersten Handelsdaten von der Endverbrauchereinrichtung (3, 4) Veranlassen, dass die Handel-Server-Zentrale (2) die verschlüsselten ersten Handelsdaten auf eine symmetrische Art und Weise und über eine asymmetrische einzelne Funktion durch die Verwendung des öffentlichen Schlüssels (31, 41) und die Hardware-Seriennummer (33, 43) von der Endverbrauchereinrichtung (3, 4) entschlüsselt, um Inhalte der ersten Handelsdaten zu erhalten;
(2-3) um zweite Handelsdaten von der Handel-Server-Zentrale (2) an die Endverbrauchereinrichtung (3, 4) zu übertragen Veranlassen, dass die Handel-Server-Zentrale (2) die zweiten Handelsdaten auf eine symmetrische Art und Weise und über eine asymmetrische einzelne Funktion durch die Verwendung der Hardware-Seriennummer (33, 43) und eines öffentlichen Schlüssels (31, 41) von der Endverbrauchereinrichtung (3, 4) verschlüsselt, und die verschlüsselten zweiten Handelsdaten über das Datenübertragungsnetzwerk (11) an die Endverbrauchereinrichtung (3, 4) überträgt;
(2-4) auf ein Empfangen der verschlüsselten zweiten Handelsdaten von der Handel-Server-Zentrale (2) Veranlassen, dass die Endverbrauchereinrichtung (3, 4) die verschlüsselten zweiten Handelsdaten auf eine symmetrische Art und Weise und über eine asymmetrische einzelne Funktion durch die Verwendung des privaten Schlüssels (32, 42) und die Hardware-Seriennummer (33, 43) von dieser entschlüsselt, um Inhalte der zweiten Handelsdaten zu erhalten; und
(2-5) Beenden des sicheren E-Commerce-Handels, wenn Inhalte der zweiten Handelsdaten erhalten werden.

13. Verfahren nach Anspruch 1, wobei das Datenübertragungsnetzwerk (11) das Internet oder ein Intranet ist.

14. Verfahren nach Anspruch 1, wobei die Endverbrauchereinrichtung (3, 4) ein Personal Computer (PC), ein Personal Digital Assistance (PDA) oder eine elektronische Leseeinrichtung ist.

15. System für einen sicheren Electronic-Commerce-Handel (E-Commerce), das eine Handel-Server-Zentrale (2), die als eine Server-Plattform für den sicheren E-Commerce-Handel dient, um eine Hardware-Seriennummer (33, 43) und persönliche Informationen eines Anwenders von mindestens einer Endverbrauchereinrichtung (3, 4) aufzuzeichnen und einen öffentlichen Schlüssel (21) und einen privaten Schlüssel (22) der Handel-Server-Zentrale (2) und einen öffentlichen Schlüssel (31, 41) der Endverbrauchereinrichtung (3, 4) zu speichern, und um Handelsdaten auf eine symmetrische Art und Weise und über eine asymmetrische einzelne Funktion zu verschlüsseln/entschlüsseln;
ein Datenübertragungsnetzwerk (11) zum Übertragen von Daten, um eine Durchführung des Handels zwischen der Handel-Server-Zentrale (2) und der Endverbrauchereinrichtung (3, 4) zu ermöglichen;
mindestens eine Endverbrauchereinrichtung (3, 4), um eine Hardware-Seriennummer (33, 43), einen öffentlichen Schlüssel (31, 41) und einen privaten Schlüssel (32, 42) von dieser und den öffentlichen Schlüssel (21) von der Handel-Server-Zentrale (2) zu speichern, wobei die Hardware-Seriennummer (33, 43) für die Endverbrauchereinrichtung (3, 4) eindeutig ist, und um die Handelsdaten auf eine symmetrische Art und Weise und über eine asymmetrische einzelne Funktion zu verschlüsseln/entschlüsseln;
ein Handel-Server-Verschlüsselungs-/Entschlüsselungsmodul (20) in der Handel-Server-Zentrale (2), wobei das Handel-Server-Verschlüsselungs-/Entschlüsselungsmodul (20) und die Endverbrauchereinrichtung (3, 4) ihre jeweiligen öffentlichen Schlüssel (21, 31, 41) miteinander über das Datenübertragungsnetzwerk (11) austauschen,
wobei während der Durchführung des sicheren E-Commerce-Handels
das Handel-Server-Verschlüsselungs-/ Entschlüsselungsmodul (20) die Handelsdaten auf eine symmetrische Art und Weise durch die Verwendung der Hardware-Seriennummer (33, 43) der Endverbrauchereinrichtung (3, 4) und über eine asymmetrische einzelne Funktion durch die Verwendung des öffentlichen Schlüssels (31, 41) der Endverbrauchereinrichtung (3, 4) verschlüsselt, während das Handel-Server-Verschlüsselungs-/ Entschlüsselungsmodul (20) die verschlüsselten Daten über eine asymmetrische einzelne Funktion durch die Verwendung des öffentlichen Schlüssels (31, 41) der Endverbrauchereinrichtung (3, 4) und auf eine symmetrische Art und Weise durch die Verwendung der Hardware-Seriennummer (33, 43) der Endverbrauchereinrichtung (3, 4) entschlüsselt, so dass das Handel-Server-Verschlüsselungs-/Entschlüsselungsmodul (20) ausgebildet ist, um die Handelsdaten zweifach zu verschlüsseln, und um zweifach verschlüsselte Handelsdaten zu entschlüsseln,
ein Verschlüsselungs-/Entschlüsselungsmodul (30, 40) in der Endverbrauchereinrichtung (3, 4), wobei das Verschlüsselungs-/Entschlüsselungsmodul (30, 40) und die Handel-Server-Zentrale (2) ihre jeweiligen öffentlichen Schlüssel (21, 31, 41) miteinander über das Datenübertragungsnetzwerk (11) austauschen; wobei während der Durchführung des sicheren E-Commerce-Handels das Verschlüsselungs-/Entschlüsselungsmodul (30, 40) die Handelsdaten auf eine symmetrische Art und Weise durch die Verwendung der Hardware-Seriennummer (33, 43) der Endverbrauchereinrichtung (3, 4) und über eine asymmetrische einzelne Funktion durch die Verwendung des privaten Schlüssels (32, 42) der Endverbrauchereinrichtung (3, 4) verschlüsselt, während das Verschlüsselungs-/Entschlüsselungsmodul (30, 40) die verschlüsselten Handelsdaten über eine asymmetrische einzelne Funktion durch die Verwendung des privaten Schlüssels (32, 42) der Endverbrauchereinrichtung (3, 4) und auf eine symmetrische Art und Weise durch die Verwendung der Hardware-Seriennummer (33, 43) der Endverbrauchereinrichtung (3, 4) entschlüsselt, so dass das Verschlüsselungs-/ Entschlüsselungsmodul (30, 40) in der Endverbrauchereinrichtung (3, 4) ausgebildet ist, um die Handelsdaten zweifach zu verschlüsseln, und um die zweifach verschlüsselten Handelsdaten zu entschlüsseln
umfasst.

16. System nach Anspruch 15, wobei **dadurch**, dass die Endverbrauchereinrichtung (3,4) mit der Handel-Server-Zentrale (2) über das Datenübertragungsnetzwerk (11) in einer Verbindung steht, die Endverbrauchereinrichtung (3, 4) den öffentlichen Schlüssel (21) der Handel-Server-Zentrale (2) erhält und den öffentlichen Schlüssel (31, 41), die Hardware-Seriennummer (33, 43) und die persönlichen Informationen des Anwenders von dieser über eine asymmetrische einzelne Funktion durch die Verwendung des öffentlichen Schlüssels (21) der Handel-Server-Zentrale (2) verschlüsselt, was ermöglicht, dass die verschlüsselten Daten über das Datenübertragungsnetzwerk (11) an die Handel-Server-Zentrale (2) übertragen werden; wobei die Handel-Server-Zentrale (2) auf ein Empfangen der verschlüsselten Daten von der Endverbrauchereinrichtung (3, 4) die verschlüsselten Daten über eine asymmetrische einzelne Funktion durch die Verwendung des privaten Schlüssels (22) von dieser entschlüsselt, um den öffentlichen Schlüssel (31, 41), die Hardware-Seriennummer (33, 43) und die persönlichen Informationen des Anwenders der Endverbrauchereinrichtung (3, 4) zu erhalten; und wobei die Handel-Server-Zentrale (2) die Hardware-Seriennummer (33, 43) und die persönlichen Informationen des Anwenders der Endverbrauchereinrichtung (3, 4) aufzeichnet und den öffentlichen Schlüssel (31, 41) der Endverbrauchereinrichtung (3, 4) vor dem Durchführen des sicheren E-Commerce-Handels speichert.

## Revendications

1. Procédé d'échange commercial électronique sécurisé (e-commerce) applicable à un environnement de réseau pour le commerce en ligne, pouvant être utilisé dans un système d'échange commercial électronique sécurisé comprenant un centre serveur commercial (2), un réseau de transmission de données (11) et un dispositif terminal d'utilisateur (3, 4), dans lequel le dispositif terminal d'utilisateur (3, 4) possède un numéro de série matériel unique (33, 43), le procédé comprenant les étapes consistant à :
(1) établir une connexion réseau entre le centre serveur commercial (2) et le dispositif terminal d'utilisateur (3, 4) par l'intermédiaire du réseau de transmission de données (11), dans lequel le centre serveur commercial (2) et le dispositif terminal d'utilisateur (3, 4) échangent l'un avec l'autre leurs clés publiques respectives (21, 31, 41) par l'intermédiaire du réseau de transmission de données (11) ;
(2) lorsque l'échange des clés publiques (21, 31, 41) est achevé entre le centre serveur commercial (2) et le dispositif terminal d'utilisateur (3, 4), crypter/décrypter des données commerciales de manière symétrique par utilisation du numéro de série matériel (33, 43) et au moyen d'une fonction unique asymétrique par utilisation de la clé publique (31, 41) et d'une clé privée (32, 42) du dispositif terminal d'utilisateur (3, 4) pour effectuer un échange commercial électronique sécurisé ; dans lequel l'étape (2) consistant à crypter/décrypter les données commerciales comprend les sous-étapes consistant à :
(2-1) déterminer un sens de transmission des données commerciales ; si les données commerciales sont destinées à être transmises depuis le dispositif terminal d'utilisateur (3, 4) par l'intermédiaire du réseau de transmission de données (11) au centre serveur commercial (2), effectuer la sous-étape (2-2) ; si les données commerciales sont destinées à être transmises depuis le centre serveur commercial (2) par l'intermédiaire du réseau de transmission de données (11) au dispositif terminal d'utilisateur (3, 4), effectuer la sous-étape (2-4) ;
(2-2) dans le cas où les données commerciales sont destinées à être transmises du dispositif terminal d'utilisateur (3, 4) au centre serveur commercial (2), faire en sorte que le dispositif terminal d'utilisateur (3, 4) crypte les données commerciales de manière symétrique par l'utilisation dudit numéro de série matériel (33, 43) et au moyen d'une fonction unique asymétrique par utilisation de la clé privée (32, 42) pour former des données commerciales doublement cryptées, et transmettre les données commerciales doublement cryptées par l'intermédiaire du réseau de transmission de données (11) au centre serveur commercial (2) ; puis effectuer la sous-étape (2-3) ;
(2-3) lors de la réception des données commerciales doublement cryptées du dispositif terminal d'utilisateur (3, 4), faire en sorte que le centre serveur commercial (2) décrypte les données commerciales doublement cryptées de manière symétrique par utilisation dudit numéro de série matériel (33, 43) et au moyen d'une fonction unique asymétrique par utilisation de la clé publique stockée (31, 41) pour obtenir le contenu des données commerciales ; puis effectuer la sous-étape (2-6) ;
(2-4) dans le cas où les données commerciales sont destinées à être transmises du centre serveur commercial (2) au dispositif terminal d'utilisateur (3, 4), faire en sorte que le centre serveur commercial (2) crypte les données commerciales de manière symétrique par utilisation dudit numéro de série matériel (33, 43) et au moyen d'une fonction unique asymétrique par utilisation de la clé publique (31, 41) du dispositif terminal d'utilisateur (3, 4) pour former des données commerciales doublement cryptées et transmettre les données commerciales doublement cryptées par l'intermédiaire du réseau de transmission de données (11) au dispositif terminal d'utilisateur (3, 4) ;
(2-5) lors de la réception des données commerciales doublement cryptées du centre serveur commercial (2), faire en sorte que le dispositif terminal d'utilisateur (3,4) décrypte les données commerciales doublement cryptées de manière symétrique par utilisation dudit numéro de série matériel (33, 43) et au moyen d'une fonction unique asymétrique par utilisation de la clé privée (32, 42) pour obtenir le contenu des données commerciales ; et
(2-6) lorsque le décryptage des données commerciales est achevé, pour obtenir le contenu des données commerciales, déterminer si l'échange commercial électronique sécurisé doit être poursuivi ; si oui, revenir à la sous-étape (2-1) ; sinon, effectuer l'étape (3) ; et
(3) terminer l'échange commercial électronique sécurisé.

2. Procédé selon la revendication 1, dans lequel l'étape (1) comprend les sous-étapes consistant à :
(1-1) lorsque la connexion réseau est établie entre le centre serveur commercial (2) et le dispositif terminal d'utilisateur (3,4), faire en sorte que le centre serveur commercial (2) transmette une clé publique (21) de celui-ci par l'intermédiaire du réseau de transmission de données (11) au dispositif terminal d'utilisateur (3, 4) ;
(1-2) lors de la réception de la clé publique (21) en provenance du centre serveur commercial (2), faire en sorte que le dispositif terminal d'utilisateur (3, 4) crypte une clé publique (31, 41), un numéro de série matériel (33, 43) et des informations personnelles de son utilisateur au moyen d'une fonction unique asymétrique par utilisation de la clé publique (21) du centre serveur commercial (2), et transmette les données cryptées au centre serveur commercial (2) au moyen du réseau de transmission de données (11) ; et
(1-3) lors de la réception des données cryptées du dispositif terminal d'utilisateur (3, 4), faire en sorte que le centre serveur commercial (2) décrypte les données cryptées au moyen d'une fonction unique asymétrique par utilisation d'une clé privée (22) du centre serveur commercial (2), pour obtenir la clé publique (31, 41), le numéro de série matériel (33, 43) et les informations personnelles d'utilisateur du dispositif terminal d'utilisateur (3, 4), qu'il enregistre le numéro de série matériel obtenu (33, 43) et les informations personnelles de l'utilisateur et qu'il stocke également la clé publique (31,41) du dispositif terminal d'utilisateur (3,4), de façon à achever l'échange des clés publiques (21, 31, 41) entre le centre serveur commercial (2) et le dispositif terminal d'utilisateur (3, 4).

3. Procédé selon la revendication 1, dans lequel, lors de la sous-étape (2-2), le dispositif terminal d'utilisateur (3, 4) effectue un premier traitement de cryptage pour crypter symétriquement les données commerciales, destinées à être transmises au centre serveur commercial (2), par utilisation du numéro de série matériel (33, 43) du dispositif terminal d'utilisateur (3, 4), puis le dispositif terminal d'utilisateur (3, 4) effectue un second traitement de cryptage pour crypter de façon supplémentaire les données commerciales cryptées au moyen d'une fonction unique asymétrique par utilisation de sa clé privée (32, 42), afin de transmettre les données commerciales doublement cryptées par l'intermédiaire du réseau de transmission de données (11) au centre serveur commercial (2).

4. Procédé selon la revendication 3, dans lequel, lors de la sous-étape (2-3), le centre serveur commercial (2) décrypte les données commerciales doublement cryptées provenant du dispositif terminal d'utilisateur (3, 4) au moyen d'une fonction unique asymétrique par utilisation de la clé publique (31, 41) du dispositif terminal d'utilisateur (3, 4), puis le centre serveur commercial (2) décrypte en outre symétriquement les données commerciales par utilisation du numéro de série matériel (33, 43) du dispositif terminal d'utilisateur (3, 4) pour obtenir le contenu des données commerciales.

5. Procédé selon la revendication 1, dans lequel, lors de la sous-étape (2-2), le dispositif terminal d'utilisateur (3, 4) effectue un premier traitement de cryptage pour crypter les données commerciales destinées à être transmises au centre serveur commercial (2), au moyen d'une fonction unique asymétrique par utilisation de la clé privée (32, 42) du dispositif terminal d'utilisateur (3, 4), puis le dispositif terminal d'utilisateur (3, 4) effectue un second traitement de cryptage pour crypter symétriquement de façon supplémentaire les données commerciales cryptées par utilisation du numéro de série matériel (33, 43) de celui-ci, afin de transmettre les données commerciales doublement cryptées au moyen du réseau de transmission de données (11) au centre serveur commercial (2).

6. Procédé selon la revendication 5, dans lequel, lors de la sous-étape (2-3), le centre serveur commercial (2) décrypte symétriquement les données commerciales doublement cryptées provenant du dispositif terminal d'utilisateur (3, 4) par utilisation du numéro de série matériel (33, 43) du dispositif terminal d'utilisateur (3, 4), puis le centre serveur commercial (2) décrypte en outre les données commerciales au moyen d'une fonction unique asymétrique par utilisation de la clé publique (31, 41) du dispositif terminal d'utilisateur (3, 4) pour obtenir le contenu des données commerciales.

7. Procédé selon la revendication 1, dans lequel, lors de la sous-étape (2-4), le centre serveur commercial (2) effectue un premier traitement de cryptage pour crypter symétriquement les données commerciales destinées à être transmises au dispositif terminal d'utilisateur (3, 4) par utilisation du numéro de série matériel (33, 43) du dispositif terminal d'utilisateur (3, 4), puis le centre serveur commercial (2) effectue un second traitement de cryptage pour crypter de façon supplémentaire les données commerciales cryptées au moyen d'une fonction unique asymétrique par utilisation de la clé publique (31, 41) du dispositif terminal d'utilisateur (3, 4), afin de transmettre les données commerciales doublement cryptées au moyen du réseau de transmission de données (11) au dispositif terminal d'utilisateur (3, 4).

8. Procédé selon la revendication 7, dans lequel, lors de la sous-étape (2-5), le dispositif terminal d'utilisateur (3, 4) décrypte les données commerciales doublement cryptées provenant du centre serveur commercial (2) au moyen d'une fonction unique asymétrique par utilisation de la clé privée (32, 42) du dispositif terminal d'utilisateur (3, 4), puis le dispositif terminal d'utilisateur (3, 4) décrypte en outre symétriquement les données commerciales par utilisation de son numéro de série matériel (33, 43) pour obtenir le contenu des données commerciales .

9. Procédé selon la revendication 1, dans lequel, lors de la sous-étape (2-4), le centre serveur commercial (2) effectue un premier traitement de cryptage pour crypter les données commerciales destinées à être transmises au dispositif terminal d'utilisateur (3, 4) au moyen d'une fonction unique asymétrique par utilisation de la clé publique (31, 41) du dispositif terminal d'utilisateur (3, 4), puis le centre serveur commercial (2) effectue un second traitement de cryptage pour crypter symétriquement de façon supplémentaire les données commerciales cryptées par utilisation du numéro de série matériel (33, 43) du dispositif terminal d'utilisateur (3, 4), afin de transmettre les données commerciales doublement cryptées par l'intermédiaire du réseau de transmission de données (11) au dispositif terminal d'utilisateur (3, 4).

10. Procédé selon la revendication 9, dans lequel, lors de la sous-étape (2-5), le dispositif terminal d'utilisateur (3, 4) décrypte symétriquement les données commerciales doublement cryptées provenant du centre serveur commercial (2) par utilisation du numéro de série matériel (33, 43) du dispositif terminal d'utilisateur (3, 4), puis le dispositif terminal d'utilisateur (3, 4) décrypte en outre les données commerciales au moyen d'une fonction unique asymétrique par utilisation de la clé privée (32, 42) de celui-ci pour obtenir le contenu des données commerciales.

11. Procédé selon la revendication 2, dans lequel l'étape (2) comprend les sous-étapes consistant à :
(2-1) lorsque l'échange des clés publiques (21, 31, 41) entre le centre serveur commercial (2) et le dispositif terminal d'utilisateur (3, 4) est achevé, pour transmettre des premières données commerciales du centre serveur commercial (2) au dispositif terminal d'utilisateur (3, 4), faire en sorte que le centre serveur commercial (2) crypte les premières données commerciales de manière symétrique et au moyen d'une fonction unique asymétrique par utilisation du numéro de série matériel (33, 43) et de la clé publique (31, 41) du dispositif terminal d'utilisateur (3, 4) et qu'il transmette les premières données commerciales cryptées par l'intermédiaire du réseau de transmission de données (11) au dispositif terminal d'utilisateur (3, 4) ;
(2-2) lors de la réception des premières données commerciales cryptées du centre serveur commercial (2), faire en sorte que le dispositif terminal d'utilisateur (3, 4) décrypte les premières données commerciales cryptées de manière symétrique et au moyen d'une fonction unique asymétrique par utilisation de la clé privée (32, 42) et de son numéro de série matériel (33, 43) pour obtenir le contenu des premières données commerciales ;
(2-3) pour transmettre des secondes données commerciales du dispositif terminal d'utilisateur (3, 4) au centre serveur commercial (2), faire en sorte que le dispositif terminal utilisateur (3, 4) crypte les secondes données commerciales de manière symétrique et au moyen d'une fonction unique asymétrique par utilisation du numéro de série matériel (33, 43) et de sa clé privée (32, 42), et qu'il transmette les secondes données commerciales cryptées par l'intermédiaire du réseau de transmission de données (11) au centre serveur commercial (2) ;
(2-4) lors de la réception des secondes données commerciales cryptées du dispositif terminal d'utilisateur (3, 4) faire en sorte que le centre serveur commercial (2) décrypte les secondes données commerciales cryptées de manière symétrique et au moyen d'une fonction unique asymétrique par utilisation de la clé privée (31, 41) et du numéro de série matériel (33, 43) du dispositif terminal d'utilisateur (3, 4) pour obtenir le contenu des secondes données commerciales ; et
(2-5) interrompre l'échange commercial électronique sécurisé lorsque le contenu des secondes données commerciales est obtenu.

12. Procédé selon la revendication 2, dans lequel l'étape (2) comprend les sous-étapes consistant à :
(2-1) lorsque l'échange des clés publiques (21, 31, 41) entre le centre serveur commercial (2) et le dispositif terminal d'utilisateur (3, 4) est achevé, pour transmettre les premières données commerciales du dispositif terminal d'utilisateur (3, 4) au centre serveur commercial (2), faire en sorte que le dispositif terminal d'utilisateur (3, 4) crypte les premières données commerciales de manière symétrique et au moyen d'une fonction unique asymétrique par utilisation du numéro de série matériel (33, 43) et de sa clé privée (32, 42), et qu'il transmette les premières données commerciales cryptées au moyen du réseau de transmission de données (11) au centre serveur commercial (2) ;
(2-2) lors de la réception des premières données commerciales cryptées du dispositif terminal d'utilisateur (3, 4), faire en sorte que le centre serveur commercial (2) décrypte les premières données commerciales cryptées de manière symétrique et au moyen d'une fonction unique asymétrique par utilisation de la clé publique (31, 41) et du numéro de série matériel (33, 43) du dispositif terminal d'utilisateur (3, 4) pour obtenir le contenu des premières données commerciales ;
(2-3) pour transmettre les secondes données commerciales du centre serveur commercial (2) au dispositif terminal d'utilisateur (3, 4), faire en sorte que le centre serveur commercial (2) crypte les secondes données commerciales de manière symétrique et au moyen d'une fonction unique asymétrique par utilisation du numéro de série matériel (33, 43) et de la clé publique (31, 41) du dispositif terminal d'utilisateur (3, 4), et qu'il transmette les secondes données commerciales cryptées par l'intermédiaire du réseau de transmission de données (11) au dispositif terminal d'utilisateur (3, 4) ;
(2-4) lors de la réception des secondes données commerciales cryptées du centre serveur commercial (2), faire en sorte que le dispositif terminal d'utilisateur (3, 4) décrypte les secondes données commerciales cryptées de manière symétrique et au moyen d'une fonction unique asymétrique par utilisation de la clé privée (32, 42) et de son numéro de série matériel (33, 43) pour obtenir le contenu des secondes données commerciales ; et
(2-5) interrompre l'échange commercial électronique sécurisé lorsque le contenu des secondes données commerciales est obtenu.

13. Procédé selon la revendication 1, dans lequel le réseau de transmission de données (11) est l'Internet ou un Intranet.

14. Procédé selon la revendication 1, dans lequel le dispositif terminal d'utilisateur (3, 4) est un ordinateur personnel (PC), un assistant numérique personnel (PDA pour Personal Digital Assistant) ou un lecteur électronique.

15. Système d'échange commercial électronique sécurisé (e-commerce) comprenant :
un centre serveur commercial (2) desservant une plate-forme de serveur d'échange commercial électronique sécurisé, pour enregistrer un numéro de série matériel (33, 43) et des informations personnelles de l'utilisateur d'au moins un dispositif terminal d'utilisateur (3, 4) et stocker une clé publique (21) et une clé privée (22) du centre serveur commercial (2) et une clé publique (31, 41) du dispositif terminal d'utilisateur (3, 4), et pour crypter/décrypter des données commerciales de manière symétrique et au moyen d'une fonction unique asymétrique ;
un réseau de transmission de données (11) pour transmettre des données permettant d'effectuer un échange commercial entre le centre serveur commercial (2) et le dispositif terminal d'utilisateur (3, 4) ;
au moins un dispositif terminal d'utilisateur (3, 4) pour stocker un numéro de série matériel (33, 43), une clé publique (31, 41) et sa clé privée (32, 42) et la clé publique (21) du centre serveur commercial (2), le numéro de série matériel (33, 43) étant unique au dispositif terminal d'utilisateur (3, 4), et pour crypter/décrypter les données commerciales de manière symétrique et au moyen d'une fonction unique asymétrique ;
un module de cryptage/décryptage de serveur commercial (20) dans le centre serveur commercial (2), dans lequel le module de cryptage/décryptage de serveur commercial (20) et le dispositif terminal d'utilisateur (3, 4) échangent l'un avec l'autre leurs clés publiques respectives (21, 31, 41) au moyen du réseau de transmission de données (11), dans lequel, lorsqu'un échange commercial sécurisé est effectué,
le module de cryptage/décryptage de serveur commercial (20) crypte les données commerciales de manière symétrique par utilisation du numéro de série matériel (33, 43) du dispositif terminal d'utilisateur (3, 4) et au moyen d'une fonction unique asymétrique par utilisation de la clé publique (31, 41) du dispositif terminal d'utilisateur (3, 4), tandis que le module de cryptage/décryptage de serveur commercial (20) décrypte les données commerciales cryptées au moyen d'une fonction unique asymétrique par utilisation de la clé publique (31, 41) du dispositif terminal d'utilisateur (3, 4) et de manière symétrique par utilisation du numéro de série matériel (33, 43) du dispositif terminal d'utilisateur (3, 4), afin que le module de cryptage/décryptage de serveur commercial (20) soit conçu pour crypter doublement les données commerciales et pour décrypter doublement les données commerciales cryptées, un module de cryptage/décryptage (30, 40) dans le dispositif terminal d'utilisateur (3, 4), dans lequel le module de cryptage/décryptage (30, 40) et le centre serveur commercial (2) échangent l'un avec l'autre leurs clés publiques respectives (21, 31, 41) au moyen du réseau de transmission de données (11), dans lequel, pendant qu'un échange commercial sécurisé est effectué, le module de cryptage/décryptage (30, 40) crypte les données commerciales de manière symétrique par utilisation du numéro de série matériel (33, 43) du dispositif terminal d'utilisateur (3, 4) et au moyen d'une fonction unique asymétrique par utilisation de la clé privée (32, 42) du dispositif terminal d'utilisateur (3, 4), tandis que le module de cryptage/décryptage (30, 40) décrypte les données commerciales cryptées au moyen d'une fonction unique asymétrique par utilisation de la clé privée (32, 42) du dispositif terminal d'utilisateur (3, 4) et de manière symétrique par utilisation du numéro de série matériel (33, 43) du dispositif terminal d'utilisateur (3, 4), de sorte que le module de cryptage/décryptage (30, 40) du dispositif terminal d'utilisateur (3, 4) est conçu pour crypter doublement les données commerciales et pour décrypter les données commerciales doublement cryptées.

16. Système selon la revendication 15, dans lequel, le dispositif terminal d'utilisateur (3, 4) étant relié au centre serveur commercial (2) au moyen du réseau de transmission de données (11), le dispositif terminal d'utilisateur (3, 4) obtient la clé publique (21) du centre serveur commercial (2) et crypte la clé publique (31, 41), le numéro de série matériel (33, 43) et ses informations personnelles d'utilisateur au moyen d'une fonction unique asymétrique par utilisation de la clé publique (21) du centre serveur commercial (2), cela permettant de transmettre les données cryptées au moyen du réseau de transmission de données (11) au centre serveur commercial (2) ; lors de la réception des données cryptées du dispositif terminal d'utilisateur (3, 4), le centre serveur commercial (2) décrypte les données cryptées au moyen d'une fonction unique asymétrique par utilisation de sa clé privée (22) pour obtenir la clé publique (31, 41), le numéro de série matériel (33, 43) et les informations personnelles d'utilisateur du dispositif terminal d'utilisateur (3, 4) ; et le centre serveur commercial (2) enregistre le numéro de série matériel (33, 43) et les informations personnelles d'utilisateur du dispositif terminal d'utilisateur (3, 4) et stocke la clé publique (31, 41) du dispositif terminal d'utilisateur (3, 4) avant d'effectuer l'échange commercial électronique sécurisé.
